# EUROPEAN PATENT APPLICATION

(11) **EP 4 848 671 A1**
(43) Date of publication of application: **02.12.2026**
(21) Application number: 25747647.3
(22) Date of filing: 21.01.2025
(51) Int. Cl.: H04L 27/00

(54) **COMMUNICATION METHOD, AND APPARATUS**

(30) Priority: 04.02.2024 CN 202410160559
(71) Applicant: HUAWEI TECHNOLOGIES CO., LTD., Shenzhen, Guangdong 518129 (CN)
(72) Inventor: WANG, Fan, Shenzhen, Guangdong 518129 (CN); ZHANG, Zhang, Shenzhen, Guangdong 518129 (CN)
(74) Representative: Huawei European IPR
(86) International application number: PCT/CN2025/073689
(87) International publication number: WO 2025/162075

(57) **Abstract**

A communication method and apparatus are provided. The method includes: A network device determines a first sequence, generates a first secondary synchronization signal based on the first sequence, and sends a first synchronization signal. The first synchronization signal includes the first secondary synchronization signal. The first sequence *x(n)* satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$, where e is Euler's number, *f*(*n*) is a polynomial of degree x, x is greater than 2, *N* is a length of the first sequence, 0 ≤ n ≤ *N - 1,* M is an integer, and c is an integer. The first sequence is used as a sequence for generating a primary synchronization signal, so that synchronization performance can be improved, bandwidth can be effectively utilized, and a system capacity for synchronization signals can be increased.

## Description

### CROSS-REFERENCE TO RELATED APPLICATIONS

This application claims priority to Chinese Patent Application No. 202410160559.4, filed with the China National Intellectual Property Administration on February 4, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A sequence is a group of numbers or a group of elements that are arranged in order, and may be used to carry signals or information between devices. For example, the sequence may be used to carry synchronization information. For example, the sequence may be used to generate a secondary synchronization signal (secondary synchronization signal, SSS). Currently, commonly used sequences include a Zadoff-Chu (Zadoff-Chu, ZC) sequence, an m-sequence, a Golay (Golay) sequence, or the like.

The ZC sequence features joint time-frequency ambiguity, and cross-correlation performance of the ZC sequence is affected when there is a frequency offset. Using the ZC sequence for SSS generation results in high SSS detection complexity and/or low detection performance. Because a length of the m-sequence is limited, a plurality of m-sequences are required to carry information carried in an SSS, which degrades SSS detection performance and may cause false detection. The SSS needs to be detected under a specific frequency offset. However, when there is a Doppler frequency offset, correlation performance of the Golay sequence is degraded.

### SUMMARY

Embodiments of this application provide a communication method and apparatus to provide a sequence for SSS generation, so as to maximize SSS detection performance.

To achieve the foregoing objectives, the following technical solutions are used in embodiments of this application.

According to a first aspect, an embodiment of this application provides a communication method. The method is applied to a network side. For example, the method is applied to a network device or a component (for example, a circuit, a chip, or a chip system) in a network device. For ease of description, the following uses an example in which the method is applied to a network device.

The communication method includes: The network device determines a first sequence, generates a first SSS based on the first sequence, and sends a first synchronization signal. The first synchronization signal includes the first SSS. The first sequence *x(n)* satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$, where e is Euler's number, *f*(*n*) is a polynomial of degree x, x is greater than 2, *N* is a length of the first sequence, 0 ≤ n ≤ *N - 1, M* is an integer, and c is an integer.

In the method, because the first sequence *x(n)* satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$, an auto-ambiguity function of the first sequence within a specific time-frequency offset range satisfies Weil's exponential sum bound, has good auto-correlation properties, and can be used as a sequence for generating a secondary synchronization signal/SSS. Compared with an m-sequence, the first sequence is subject to fewer restrictions on length, and therefore does not require a plurality of sequences to carry information carried in an SSS. This can reduce false detection and improve SSS detection performance. Because an auto-ambiguity function of the first sequence within a specific time-frequency offset range satisfies Weil's exponential sum bound, good correlation performance can still be ensured even when there is a Doppler frequency offset. Therefore, the first sequence provides better synchronization performance than a Golay sequence. Therefore, using the first sequence as an SSS sequence can achieve better synchronization performance within a specific frequency offset range, reduce false detection, and improve SSS detection performance.

In an implementation, N is P or P*^{y}*, P is a prime number, and y is a positive integer. When N is a prime number, a normalized auto-correlation value between the first sequence and a reference sequence with an arbitrary time offset and frequency offset relative to the first sequence may reach . When *N* is a non-prime number, based on a specific selection of *f*(*n*) and a sequence mapping manner, a larger correlation value may be reached at a specific time-frequency offset position.

In an implementation, the first sequence belongs to a first sequence set. The first sequence set further includes a second sequence. The second sequence is used to generate a second SSS. *fᵢ*(*n*) corresponding to the first sequence satisfies *fᵢ*(*n*) = *aᵢn*³ + *bᵢn*² + *cᵢn + dᵢ*; and *fⱼ*(*n*) corresponding to the second sequence satisfies *fⱼ*(*n*) = *aⱼn*³ *+ bⱼn*² + *cⱼn + dⱼ*, where *aⱼ ≠ aᵢ.*

Any sequence in the first sequence set has characteristics similar to characteristics of the first sequence. In other words, any sequence in the first sequence set is a polynomial sequence whose general term is ${e}^{- j 2 π \left(\frac{f \left(n\right)}{N}\right)}$ or ${e}^{- j 2 π \left(\frac{f \left(n\right)}{N}+\frac{cn}{M}\right)}$. When *f*(*n*) corresponding to any sequence in the first sequence set is a cubic polynomial, coefficients of cubic terms corresponding to sequences used for generating different secondary synchronization signals are different. For example, *aⱼ* ≠ *aᵢ*. In this way, it can be ensured that a normalized peak of a cross-ambiguity function between the first sequence and the second sequence is not greater than $\frac{2}{\sqrt{N}}$, satisfying Weil's exponential sum bound. This can reduce interference between different secondary synchronization signals.

In an implementation, the first sequence belongs to a second sequence set. The second sequence set further includes a second sequence. The second sequence is used to generate a second secondary synchronization signal. *fᵢ*(*n*) corresponding to the first sequence satisfies *fᵢ*(*n*) *= aᵢn*³ + *bᵢn*² + *cᵢn + dᵢ*; and *fⱼ*(*n*) corresponding to the second sequence satisfies *fⱼ*(*n*) *= aⱼn*³ *+ bⱼn*² *+ cⱼn + dⱼ*, where *aᵢ = aⱼ = a*, and *bᵢ ≠ bⱼ.*

When *aᵢ = aⱼ = a* and *bᵢ ≠ bⱼ,* sidelobe peak values of a cross-ambiguity function between the first sequence and the second sequence within a specific frequency offset range are not greater than $\frac{1}{\sqrt{N}}$, satisfying Weil's exponential sum bound. In this way, a plurality of sequences having a same cubic term coefficient and a quadratic term coefficient that satisfies a preset condition may be used as candidate sequences of an SSS sequence, which is more suitable for a scenario with a low PSS capacity requirement.

In an implementation, *bᵢ* and *bⱼ* satisfy (3*a* × µ) *mod N =* (*bᵢ - bⱼ*) or (3*a* × µ) mod *N =* (*bⱼ - bᵢ*), where µ is greater than or equal to a constant. In this way, within a specific frequency offset range (for example, a range of $\pm \frac{μ - 1}{2}$ subcarriers), normalized peak values of a cross-ambiguity function between any two sequences in the second sequence set are not greater than $\frac{1}{\sqrt{N}}$, satisfying Weil's exponential sum bound.

Optionally, µ represents a frequency offset between the second secondary synchronization signal and the first secondary synchronization signal.

In an implementation, the first sequence belongs to a third sequence set. The third sequence set further includes a second sequence. The second sequence is used to generate a second secondary synchronization signal. *fᵢ*(*n*) corresponding to the first sequence satisfies *fᵢ*(*n*) *= aᵢn*³ + *bᵢn*² + *cᵢn + dᵢ*; and *fⱼ*(*n*) corresponding to the second sequence satisfies *fⱼ*(*n*) *= aⱼn*³ *+ bⱼn*² *+ cⱼn + dⱼ* c, where *aᵢ = aⱼ = a*, *bᵢ = bⱼ* = b, and *cᵢ ≠ cⱼ.*

When *aᵢ = aⱼ = a*, *bᵢ = bⱼ = b,* and *cᵢ ≠ cⱼ*, normalized peak values of a cross-ambiguity function between the first sequence and the second sequence within a zero frequency offset and a specific time offset may reach 1, satisfying Weil's exponential sum bound. In this way, a plurality of sequences having a same cubic term coefficient, a same quadratic term coefficient, and a linear term coefficient that satisfies a preset condition may be used as candidate sequences of an SSS sequence, which is more suitable for a scenario with a low PSS capacity requirement.

Optionally, the frequency offset between the second secondary synchronization signal and the first secondary synchronization signal is 0, *cᵢ* and *cⱼ* satisfy τ mod *N =* (*cᵢ - cⱼ*), where τ is greater than or equal to a constant.

Optionally, (*cᵢ - cⱼ*) *> h*(*τ*), where *cᵢ* is a linear term coefficient of the first sequence, *cⱼ* is a linear term coefficient of the second sequence, *h*(*τ*) is a linear function of τ, and τ is greater than or equal to a constant.

In an implementation, the first sequence is an *i*^{th} sequence in a fourth sequence set. *fᵢ*(*n*) corresponding to the first sequence satisfies ${f}_{i} \left(n\right) = {am}_{i}^{3} + {bm}_{i}^{2} + {cm}_{i} + {d}_{i}$, where *mᵢ = n - kᵢ*, and 0 ≤ *k*₁ < *k*₂ .... < *k*_{Q} ≤ *N -* 1, and Q represents a quantity of sequences included in the fourth sequence set.

In this solution, the fourth sequence set includes sequences obtained by performing different cyclic shifts on a base sequence. The base sequence is a polynomial sequence whose general term is ${e}^{- j 2 π \left(\frac{f \left(n\right)}{N}\right)}$ or ${e}^{- j 2 π \left(\frac{f \left(n\right)}{N}+\frac{cn}{M}\right)}$. A cyclic shift corresponding to the *i*^{th} sequence in the fourth sequence set is *kᵢ*. Using the sequences in the third sequence set as SSS sequences can ensure that, within a specific frequency offset range, normalized values of auto-ambiguity functions of all sequences and sidelobe peak values of a cross-ambiguity function between any two sequences reach Weil's lower bound for exponential sums $\frac{1}{\sqrt{N}}$. In this way, synchronization performance can be ensured when a frequency offset of initial synchronization is within a preset range.

Optionally, *kᵢ* corresponding to the first sequence and *kⱼ* corresponding to the second sequence satisfy ((*kᵢ - kⱼ*) *mod N)* > w. The second sequence is a *j*^{th} sequence in the fourth sequence set, and w is an integer.

Optionally, *kᵢ* and *kⱼ* satisfy $\left({k}_{i}-{k}_{j}\right) mod N = \left⌊\frac{N}{\left⌈K/R\right⌉}\right⌋$ or $\left({k}_{i}-{k}_{j}\right) mod N = \left⌈\frac{N}{\left⌈K/R\right⌉}\right⌉$ , where └ ┘ represents rounding down, ┌ ┐ represents rounding up, and R represents a maximum quantity of sequences supported by changing a linear term while a same cubic term coefficient and a same quadratic term coefficient are used in the fourth sequence set.

In an implementation, the first sequence is an *i*^{th} sequence in a fifth sequence set, and the first sequence *xᵢ*(*n*) satisfying ${x}_{i} \left(n\right) = {e}^{- j 2 π \left(\frac{{f}_{i} \left(n\right)}{N}+\frac{cn}{M}\right)}$ includes: The first sequence *xᵢ*(*n*) satisfies ${x}_{i} \left(n\right) = {e}^{- j 2 π \left(\frac{{a}_{i} {n}^{3} + {b}_{i} {n}^{2} + {c}_{i} n + {d}_{i}}{N}\right)} \times {e}^{- j 2 π \left(\frac{{g}_{i} n}{M}\right)}$, where M is an integer, and *gᵢ* is an integer.

In this solution, the fifth sequence set includes sequences obtained by adjusting linear term coefficients of a plurality of base sequences. The base sequence may be a sequence in the first sequence set, or may be a sequence in the second sequence set, or may be a sequence in the third sequence set or the fourth sequence set. Using the sequences in the fifth sequence set as SSS sequences can ensure that, within a specific frequency offset range, normalized values of auto-ambiguity functions of all sequences and sidelobe peak values of a cross-ambiguity function between any two sequences reach Weil's lower bound for exponential sums $\frac{1}{\sqrt{N}}$. In this way, synchronization performance can be ensured when a frequency offset of initial synchronization is within a preset range.

In an implementation, the first synchronization signal further includes a first primary synchronization signal. The first primary synchronization signal is generated based on a third sequence. *f*(*n*) corresponding to the third sequence satisfies *f*(*n*) = *aₖn*³ + *bₖn*² *+ cₖn + dₖ*, where *aᵢ* ≠ *aₖ*; or *aᵢ = aₖ = a*, an *bᵢ* ≠ *bₖ*; or *aᵢ = aₖ = a*, *bᵢ = bₖ* = *b,* and *cᵢ ≠ cₖ.*

In this solution, the third sequence is a sequence similar to the first sequence, or the third sequence has attributes similar to attributes of the first sequence. The third sequence may be used to generate a primary synchronization signal. Cubic term coefficients corresponding to the first sequence and the third sequence are different; or cubic term coefficients corresponding to the first sequence and the third sequence are the same, and quadratic term coefficients are different; or cubit term coefficients corresponding to the first sequence and the third sequence are the same, quadratic term coefficients are the same, and linear term coefficients are different. Selecting an appropriate cubic term coefficient, quadratic term coefficient, or linear term coefficient may reduce or even eliminate interference between the first primary synchronization signal and the first secondary synchronization signal.

Optionally, *bᵢ* and *bₖ* satisfy (3*a* × µ) mod *N =* (*bᵢ - bₖ*) or (3*a* × µ) mod *N =* (*bₖ* - *bᵢ*), where µ is greater than or equal to a constant.

Optionally, µ represents a frequency offset between the first secondary synchronization signal and the first primary synchronization signal.

In an implementation, generating the first secondary synchronization signal based on the first sequence includes generating the first secondary synchronization signal based on the fourth sequence. The fourth sequence is a first part of the first sequence; or the fourth sequence is obtained by extending the first sequence through cyclic shift extension or zero padding, and a length of the fourth sequence is greater than the length of the first sequence; or the fourth sequence includes a plurality of non-consecutive elements or a plurality of partially consecutive elements in the first sequence; or the fourth sequence is obtained by changing values of a part of elements in the first sequence to 0. At least two adjacent elements in the plurality of partially consecutive elements are non-consecutive. Alternatively, the plurality of partially consecutive elements include a plurality of element groups, where elements in some element groups are consecutive, and elements in some element groups are non-consecutive.

When generating the first secondary synchronization signal based on the first sequence, the network device may process the first sequence, and generate the first secondary synchronization signal based on a processed first sequence (namely, the fourth sequence). In different application scenarios, processing manners of the first sequence may be different, to adapt to a plurality of application scenarios.

According to a second aspect, an embodiment of this application provides a communication method. The method is applied to a terminal side. For example, the method is applied to a terminal device or a communication module in a terminal device, or a circuit or a chip (for example, a modem (Modem) chip, also referred to as a baseband (baseband) chip, or a system on chip (system on chip, SoC) chip or a system in package (system in package, SIP) including a modem core) responsible for a communication function in the terminal. For ease of description, the following uses an example in which the method is applied to a terminal device.

The communication method includes: The terminal device receives a first synchronization signal, where the first synchronization signal includes a first primary synchronization signal; and the terminal device determines a first sequence based on the first primary synchronization signal, where the first sequence *x(n)* satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$, *e* is Euler's number, *f*(*n*) is a polynomial of degree x, x is greater than *2, N* is a length of the first sequence, 0 ≤ n ≤ *N - 1,* M is an integer, and c is an integer.

In an implementation, N is P or P*^{y}*, P is a prime number, and y is a positive integer. In an implementation, the first sequence belongs to a first sequence set. The first sequence set further includes a second sequence. The second sequence is used to generate a second SSS. *fᵢ*(*n*) corresponding to the first sequence satisfies *fᵢ*(*n*) = *aᵢn*³ + *bᵢn*² + *cᵢn + dᵢ*; and *fⱼ*(*n*) corresponding to the second sequence satisfies *fⱼ*(*n*) = *aⱼn*³ *+ bⱼn*² + *cⱼn + dⱼ*, where *aⱼ ≠ aᵢ.*

In an implementation, the first sequence belongs to a second sequence set. The second sequence set further includes a second sequence. The second sequence is used to generate a second secondary synchronization signal. *fᵢ*(*n*) corresponding to the first sequence satisfies *fᵢ*(*n*) *= aᵢn*³ + *bᵢn*² + *cᵢn + dᵢ*; and *fⱼ*(*n*) corresponding to the second sequence satisfies *fⱼ(n) = aⱼn*³ *+ bⱼn*² *+ cⱼn + dⱼ*, where *aᵢ = aⱼ = a*, and *bᵢ ≠ bⱼ.*

In an implementation, *bᵢ* and *bⱼ* satisfy (3*a* × µ) mod *N =* (*bᵢ - bⱼ*) or (3*a* × µ) mod *N =* (*bⱼ* - *bᵢ*), where µ is greater than or equal to a constant.

Optionally, µ represents a frequency offset between the second secondary synchronization signal and the first secondary synchronization signal.

In an implementation, the first sequence belongs to a third sequence set. The third sequence set further includes a second sequence. The second sequence is used to generate a second secondary synchronization signal. *fᵢ*(*n*) corresponding to the first sequence satisfies *fᵢ*(*n*) *= aᵢn*³ + *bᵢn*² + *cᵢn + dᵢ*; and *fⱼ*(*n*) corresponding to the second sequence satisfies *fⱼ*(*n*) *= aⱼn*³ *+ bⱼn*² *+ cⱼn + dⱼ*, where *aᵢ = aⱼ = a*, *bᵢ = bⱼ* = b, and *cᵢ ≠ cⱼ.*

Optionally, the frequency offset between the second secondary synchronization signal and the first secondary synchronization signal is 0, *cᵢ* and *cⱼ* satisfy τ mod *N =* (*cᵢ - cⱼ*), where τ is greater than or equal to a constant.

Optionally, (*cᵢ - cⱼ*) *> h*(*τ*), where *cᵢ* is a linear term coefficient of the first sequence, *cⱼ* is a linear term coefficient of the second sequence, *h*(*τ*) is a linear function of τ, and τ is greater than or equal to a constant.

In an implementation, the first sequence is an *i*^{th} sequence in a fourth sequence set. *fᵢ*(*n*) corresponding to the first sequence satisfies ${f}_{i} \left(n\right) = {am}_{i}^{3} + {bm}_{i}^{2} + {cm}_{i} + {d}_{i}$, where *mᵢ = n - kᵢ,* and 0 ≤ *k*₁ *< k*₂ *....* < *k*_{Q} ≤ *N -* 1, and Q represents a quantity of sequences included in the fourth sequence set.

Optionally, *kᵢ* corresponding to the first sequence and *kⱼ* corresponding to the second sequence satisfy ((*kᵢ - kⱼ*) *mod N)* > w. The second sequence is a *j*^{th} sequence in the fourth sequence set, and w is an integer.

Optionally, *kᵢ* and *kⱼ* satisfy $\left({k}_{i}-{k}_{j}\right) mod N = \left⌊\frac{N}{\left⌈K/R\right⌉}\right⌋$ or $\left({k}_{i}-{k}_{j}\right) mod N = \left⌈\frac{N}{\left⌈K/R\right⌉}\right⌉$ , where └ ┘ represents rounding down, ┌ ┐ represents rounding up, and R represents a maximum quantity of sequences supported by changing a linear term while a same cubic term coefficient and a same quadratic term coefficient are used in the fourth sequence set.

In an implementation, the first sequence is an *i*^{th} sequence in a fifth sequence set, and the first sequence *xᵢ*(*n*) satisfying ${x}_{i} \left(n\right) = {e}^{- j 2 π \left(\frac{{f}_{i} \left(n\right)}{N}+\frac{cn}{M}\right)}$ includes: The first sequence *xᵢ*(*n*) satisfies ${x}_{i} \left(n\right) = {e}^{- j 2 π \left(\frac{{a}_{i} {n}^{3} + {b}_{i} {n}^{2} + {c}_{i} n + {d}_{i}}{N}\right)} \times {e}^{- j 2 π \left(\frac{{g}_{i} n}{M}\right)}$, where M is an integer, and *gᵢ* is an integer.

In an implementation, the first synchronization signal further includes a first primary synchronization signal. The first primary synchronization signal is generated based on a third sequence. *f*(*n*) corresponding to the third sequence satisfies *f*(*n*) = *aₖn*³ + *bₖn*² *+ cₖn + dₖ,* where *aᵢ* ≠ *aₖ*; or *aᵢ = aₖ = a*, an *bᵢ* ≠ *bₖ;* or *aᵢ = aₖ = a, bᵢ = bₖ* = *b,* and *cᵢ ≠ cₖ.*

Optionally, *bᵢ* and *bₖ* satisfy (3*a* × µ) mod *N =* (*bᵢ - bₖ*) or (3*a* × µ) mod *N =* (*bₖ* - *bᵢ*), where µ is greater than or equal to a constant.

Optionally, µ represents a frequency offset between the first secondary synchronization signal and the first primary synchronization signal.

In an implementation, determining the first sequence based on the first secondary synchronization signal includes determining a fourth sequence based on the first secondary synchronization signal. The fourth sequence is a first part of the first sequence; or the fourth sequence is obtained by extending the first sequence through cyclic shift extension or zero padding, and a length of the fourth sequence is greater than the length of the first sequence; or the fourth sequence includes a plurality of non-consecutive elements or a plurality of partially consecutive elements in the first sequence; or the fourth sequence is obtained by changing values of a part of elements in the first sequence to 0. At least two adjacent elements in the plurality of partially consecutive elements are non-consecutive. Alternatively, the plurality of partially consecutive elements include a plurality of element groups, where elements in some element groups are consecutive, and elements in some element groups are non-consecutive.

For beneficial effects of the second aspect and the implementations of the second aspect, refer to the beneficial effects of the first aspect and the implementations of the first aspect. Details are not described herein again.

According to a third aspect, an embodiment of this application provides a communication method. The method may be performed by a first communication apparatus and a second communication apparatus. The first communication apparatus has a function of implementing the behavior in the method example in the first aspect. For example, the first communication apparatus includes a corresponding means (means), module, or unit for performing the method in the first aspect, and the module, the means, or the unit may be implemented by using software and/or hardware. The second communication apparatus has a function of implementing the behavior in the method example in the second aspect. For example, the second communication apparatus includes a corresponding means (means), module, or unit configured to perform the method in the second aspect, and the module, the means, or the unit may be implemented by using software and/or hardware. The following uses an example in which the first communication apparatus is a network device and the second communication apparatus is a terminal device.

The communication method includes: The network device sends a first synchronization signal, where the first synchronization signal includes a first secondary synchronization signal, and the first secondary synchronization signal is generated based on a first sequence; and the terminal device receives the first synchronization signal, and determines the first sequence based on the first secondary synchronization signal. The first sequence *x(n)* satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$, where e is Euler's number, *f*(*n*) is a polynomial of degree x, x is greater than 2, *N* is a length of the first sequence, 0 ≤ n ≤ *N - 1, M* is an integer, and c is an integer.

For beneficial effects of the third aspect, refer to the beneficial effects of the first aspect and the implementations of the first aspect. Details are not described herein again.

According to a fourth aspect, an embodiment of this application provides a communication apparatus. The communication apparatus has a function of implementing the behavior in the method example in the first aspect or the second aspect. For beneficial effects, refer to related descriptions of the first aspect or the second aspect. Details are not described herein again. For example, the communication apparatus may be the network device in the first aspect, or the communication apparatus may be an apparatus that can support the network device in implementing a function required by the method provided in the first aspect. For example, the communication apparatus may be a chip or a chip system in the network device. For another example, the communication apparatus may be the terminal device in the second aspect, or the communication apparatus may be an apparatus that can support the terminal device in implementing a function required by the method provided in the second aspect. For example, the communication apparatus may be a chip or a chip system in the terminal device.

In a possible design, the communication apparatus includes a baseband apparatus and a radio frequency apparatus.

In a possible design, the communication apparatus includes a corresponding means (means) or module configured to perform the method according to the first aspect or the second aspect. For example, the communication apparatus includes a processing unit (or referred to as a processing module or a processor) and/or a transceiver unit (or referred to as a transceiver module or a transceiver). The transceiver unit can implement a sending function and a receiving function. When the transceiver unit implements the sending function, the transceiver unit may be referred to as a sending unit (or referred to as a sending module). When the transceiver unit implements the receiving function, the transceiver unit may be referred to as a receiving unit (or referred to as a receiving module). The sending unit and the receiving unit may be a same functional unit, the functional unit is referred to as the transceiver unit, and the functional unit can implement the sending function and the receiving function. Alternatively, the sending unit and the receiving unit may be different functional units, and the transceiver unit is a general term for these functional units. These units (modules) may perform corresponding functions in the method example in the first aspect or the second aspect. For details, refer to detailed descriptions in the method example. Details are not described herein again.

According to a fifth aspect, an embodiment of this application provides a communication apparatus. The communication apparatus may be the communication apparatus in the fourth aspect of the foregoing embodiments, or may be a chip or a chip system disposed in the communication apparatus in the fourth aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is enabled to perform the method performed by the terminal device in the foregoing method embodiment. For example, the communication apparatus may be a terminal device or a functional module in a terminal device, for example, a baseband chip and a radio frequency chip. Alternatively, when the processor reads the computer program, the instructions, or the data, the communication apparatus is enabled to perform the method performed by the network device in the foregoing method embodiment. For example, the communication apparatus may be a network device or a functional module in a network device, for example, a baseband chip and a radio frequency chip.

According to a sixth aspect, an embodiment of this application provides a chip system. The chip system includes a processor, and may further include a communication interface, to implement the method according to the first aspect or the second aspect. Optionally, the chip system further includes a memory. The memory is configured to store a computer program (or referred to as code or instructions). The processor is configured to invoke the computer program from the memory and run the computer program, so that a device in which the chip system is installed performs the method in the first aspect or the second aspect and any one of the possible implementations of the first aspect or the second aspect. The chip system may include a chip, or may include a chip and another discrete component.

According to a seventh aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to the first aspect or the second aspect.

In a specific implementation process, the communication apparatus may be a chip, the input circuit may be an input pin, the output circuit may be an output pin, and the logic circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a terminal device such as a mobile phone, or the wireless communication device may be a network device such as a base station. The interface circuit may be a radio frequency processing chip in the wireless communication device, and a processing circuit may be a baseband processing chip in the wireless communication device.

According to an eighth aspect, an embodiment of this application provides a communication system. The communication system includes a terminal device and a network device. The network device is configured to implement the function of the method in the first aspect, and the terminal device is configured to implement the function of the method in the second aspect.

According to a ninth aspect, an embodiment of this application further provides a computer-readable storage medium. The computer-readable storage medium is configured to store a computer program or instructions. When the computer program or the instructions are run, the method in the first aspect or the second aspect and any one of the possible implementations of the first aspect or the second aspect is implemented.

According to a tenth aspect, an embodiment of this application provides a computer program product including instructions. When the computer program product is run on a computer, the method according to the first aspect or the second aspect, or any one of the implementations of the first aspect or the second aspect is implemented.

For beneficial effects of the fourth aspect to the tenth aspect and the implementations of the fourth aspect to the tenth aspect, refer to the descriptions of the beneficial effects of the first aspect and any implementation of the first aspect.

### BRIEF DESCRIPTION OF DRAWINGS

FIG. 1 is a diagram of an architecture of a communication system according to an embodiment of this application;
FIG. 2 is a diagram of values of an auto-ambiguity function of a W sequence according to an embodiment of this application;
FIG. 3 is a diagram of a communication method according to an embodiment of this application;
FIG. 4 is a diagram of a structure of a communication apparatus according to an embodiment of this application; and
FIG. 5 is a diagram of another structure of a communication apparatus according to an embodiment of this application.

### DESCRIPTION OF EMBODIMENTS

Embodiments of this application provide a new sequence that can be used for SSS generation. Compared with a ZC sequence, using the sequence for SSS generation can improve synchronization performance. Compared with an m-sequence, using the sequence for SSS generation can improve detection performance of the secondary synchronization signal and reduce false detection of information carried in the SSS. Compared with a Golay sequence, using the sequence for SSS generation helps improve detection performance of the secondary synchronization signal. The following further describes the solutions provided in embodiments of this application with reference to the accompanying drawings.

The technical solutions provided in embodiments of this application may be applied to various wireless communication systems. For example, the method provided in embodiments of this application may be applied to a communication system related to the 3rd generation partnership project (the 3rd generation partnership project, 3GPP), for example, a long term evolution (long term evolution, LTE) or a 5th generation (the fifth generation, 5G) mobile communication system (for example, a new radio (new radio, NR) communication system), or may be applied to another next generation mobile communication system, for example, a 6th generation (6G) communication system, or another similar communication system. The another similar communication system may include a wireless fidelity (wireless fidelity, Wi-Fi) system, a vehicle-to-everything (vehicle-to-everything, V2X) system, an internet of things (internet of things, IoT) system, a narrowband internet of things (narrowband internet of things, NB-IoT) system, and the like.

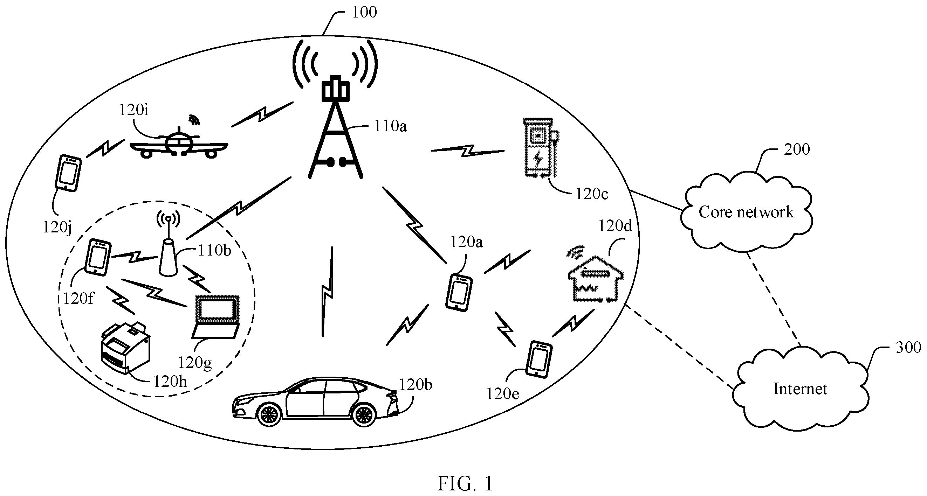

FIG. 1 shows a communication system to which an embodiment of this application is applicable. The communication system includes a radio access network 100 and a core network 200. Optionally, the communication system may further include an internet 300.

The radio access network 100 may include at least one network device and at least one terminal device. For example, the radio access network 100 includes two network devices 110a and 110b and terminal devices 120a to 120j. A network architecture shown in FIG. 1 is merely an example, and there may be fewer or more terminal devices and/or network devices. The communication system described in embodiments of this application is intended to describe the technical solutions in embodiments of this application more clearly, but constitutes no limitation on the communication system to which embodiments of this application are applicable. For example, the communication system may further include another device, and the another device includes, for example, a wireless relay device and a wireless backhaul device, which are not shown in FIG. 1. A person of ordinary skill in the art may learn that with evolution of the network architecture, the technical solutions provided in embodiments of this application are also applicable to a similar technical problem. When the technical solutions in embodiments of this application are applied to another communication system, devices, components, modules, and the like in embodiments may be replaced with corresponding devices, components, and modules in the another communication system. This is not limited.

The network device in embodiments of this application is mainly an access network device. Therefore, in the following descriptions, unless otherwise specified, the "network device" is a radio access network (radio access network, RAN) device, and may be briefly referred to as an access network device. A RAN may be a cellular system related to the 3GPP, for example, the 5G mobile communication system, or a future-oriented evolved system (for example, the 6G mobile communication system). Alternatively, the RAN may be an open access network (open RAN, O-RAN, or ORAN), a cloud radio access network (cloud radio access network, CRAN), a virtualized radio access network (virtualized RAN, vRAN), or the like. Alternatively, the RAN may be a communication system that integrates two or more of the foregoing systems. The RAN device may also be referred to as a RAN node, a RAN entity, an access node, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or the like. The RAN node may be a macro base station, a micro base station, an indoor base station, a relay node, a donor node/host node, a radio controller, or the like. Alternatively, the RAN node may be a server, a wearable device, a vehicle, a vehicle-mounted device, or the like. For example, a RAN node in a V2X technology may be a road side unit (road side unit, RSU).

In another possible scenario, the RAN node may be a module or unit that completes some functions of a base station; or a plurality of RAN nodes cooperate to assist a terminal device in implementing radio access, and different RAN nodes separately implement some functions of a base station. For example, the RAN node may be a central unit (central unit, CU), a distributed unit (distributed unit, DU), or a radio unit (radio unit, RU). Functions of the CU may be implemented by one entity, or may be implemented by different entities. For example, the functions of the CU may be further divided, that is, a control plane and a user plane are separated and implemented by different entities, which are respectively a control plane CU entity (namely, a CU-control plane (control plane, CP) entity) and a user plane CU entity (namely, a CU-user plane (user plane, UP) entity). The CU-CP entity and the CU-UP entity may be coupled to the DU, to jointly complete functions of the RAN node. The CU and the DU may be separately disposed, or may be included in a same network element, for example, a baseband unit (baseband unit, BBU).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The CU and the DU may be configured based on protocol layer functions of a wireless network that are implemented by the CU and the DU. For example, the CU is configured to implement functions of a packet data convergence protocol (packet data convergence protocol, PDCP) layer and higher protocol layers (for example, a radio resource control (radio resource control, RRC) layer and/or a service data adaptation protocol (service data adaptation protocol, SDAP) layer). The DU is configured to implement functions of protocol layers (for example, a radio link control (radio link control, RLC) layer, a medium access control (media access control, MAC) layer, and/or a physical (physical, PHY) layer) below the PDCP layer. For another example, the CU is configured to implement functions of protocol layers (for example, an RRC layer and/or an SDAP layer) above a PDCP layer; and the DU is configured to implement functions of the PDCP layer and protocol layers (for example, an RLC layer, a MAC layer, and/or a PHY layer) below the PDCP layer. For specific descriptions of the foregoing protocol layers, refer to a related technical specification of the 3GPP or a technical specification of another applicable communication protocol. Division into processing functions of the CU and the DU based on the protocol layers is merely an example. Division may alternatively be performed in another manner. This is not limited in this application. For example, in a design, the CU or the DU may alternatively have a part of processing functions of a protocol layer through division. In a design, some functions of the RLC layer and a function of a protocol layer above the RLC layer are set on the CU, and a remaining function of the RLC layer and a function of a protocol layer below the RLC layer are set on the DU.

In embodiments of this application, an apparatus configured to implement a function of the network device may be the network device, or may be an apparatus that can support the network device in implementing the function, for example, a chip system or a combined device or component that can implement the function of the network device. The apparatus may be installed in the network device. A specific technology and a specific device form that are used by the network device are not limited in embodiments of this application.

The terminal device is also referred to as a terminal, user equipment (user equipment, UE), a mobile station, a mobile terminal, or the like. In embodiments of this application, any device that can perform data communication with a base station may be considered as the terminal device. The terminal device may be widely used in various scenarios, for example, D2D communication, V2X communication, machine-type communication (machine-type communication, MTC), an IoT, virtual reality, augmented reality, industrial control, autonomous driving, telemedicine, a smart grid, smart furniture, smart office, smart wearables, smart transportation, or a smart city. For example, the terminal device may be a mobile phone, a computer, a mobile internet device (mobile internet device, MID), a wearable device, a virtual reality (virtual reality, VR) device, an augmented reality (augmented reality, AR) device, a robotic arm, a camera, a robot, a smart home device (for example, a television, an air conditioner, a robotic vacuum cleaner, a speaker, or a set-top box), a relay (relay), a customer premises equipment (customer premises equipment, CPE), a vehicle, an uncrewed aerial vehicle, a helicopter, a ship, a robot, a robotic arm, a smart home device, or the like. A specific technology and a specific device form that are used by the terminal are not limited in embodiments of this application.

If the various terminal devices described above are located on a vehicle (for example, placed/mounted in the vehicle), the terminal devices may all be considered as vehicle-mounted terminal devices. The vehicle-mounted terminal device may be a vehicle-mounted module, a vehicle-mounted assembly, a vehicle-mounted component, a vehicle-mounted chip, or an on-board unit that is built in a vehicle as one or more components or units. The vehicle may implement the methods in this application through the built-in vehicle-mounted module, vehicle-mounted assembly, vehicle-mounted component, vehicle-mounted chip, or on-board unit. The vehicle-mounted terminal device may be an entire vehicle device, a vehicle-mounted module, a vehicle, an on-board unit (on-board unit, OBU), a roadside unit (roadside unit, RSU), an in-vehicle infotainment system (also referred to as an in-vehicle sending unit) (telematics box, T-box), a chip, a system on chip (system on chip, SoC), or the like. The chip or the SoC may be installed in the vehicle, the OBU, the RSU, or the T-box.

In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be installed in the terminal device. A specific technology and a specific device form that are used by the terminal device are not limited in embodiments of this application.

The network architecture or the system and the service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of new service scenarios, the technical solutions provided in embodiments of this application are also applicable to similar technical problems.

Before a terminal device communicates with a network device, synchronization needs to be performed. Synchronization is a process of establishing time synchronization and frequency synchronization between devices. A synchronization process between the network device and the terminal device may be as follows: The network device sends a signal for synchronization (which may be referred to as a synchronization signal) to the terminal device, where the synchronization signal is generated based on a specified sequence; and the terminal device receives the synchronization signal, detects the specified sequence, and adjusts timing and a carrier frequency of the terminal device based on time and a frequency of the detected specified sequence, or instructs the network device to perform adjustment, to implement time synchronization and frequency synchronization between the terminal device and the network device. The specified sequence sent by the network device for synchronization signal generation is also referred to as a synchronization sequence. If the synchronization sequence sent by the network device is aligned with a local sequence of the terminal device (also referred to as a local sequence for short), the terminal device and the network device are time-synchronized. The synchronization sequence being aligned with the local sequence indicates that a correlation coefficient between the synchronization sequence and the local sequence is large. If a correlation peak obtained by performing correlation calculation on the synchronization sequence and the local sequence is high, the terminal device and the network device are time-synchronized. If a correlation peak obtained by the terminal device by performing correlation calculation on the local sequence and the synchronization sequence received from the network device is low, the terminal device and the network device are not time-synchronized.

The synchronization signal sent by the network device to the terminal device may be a synchronization signal and physical broadcast channel block (synchronization signal and physical broadcast channel block, SSB). The SSB includes a primary synchronization signal (primary synchronization signal, PSS), a secondary synchronization signal (secondary synchronization signal, SSS), and a physical broadcast channel (physical broadcast channel, PBCH). The PSS may be used by the terminal device to perform initial timing synchronization and frequency synchronization, and obtain a part of a cell identifier (identifier, ID). The SSS may be used by the terminal device to perform subsequent timing synchronization and frequency synchronization, and obtain a remaining part of the cell ID. The PSS and the SSS each carry some information about the cell ID. In comparison, the SSS carries more information about the cell ID. Currently, commonly used sequences for SSS generation include a ZC sequence, an m-sequence, a Golay (Golay) sequence, or the like.

The ZC sequence features joint time-frequency ambiguity, and cross-correlation performance of the ZC sequence is affected when there is a frequency offset. Using the ZC sequence for SSS generation results in high PSS detection complexity and/or low detection performance. A length of the m-sequence is limited. When the m-sequence is used as a sequence for SSS generation, because the SSS needs to carry a large amount of information, a combination of two m-sequences is used to carry information carried in the SSS. Either sequence in the sequence combination may be considered as a single sequence. A length of the single sequence is short, correlation between the single sequences is poor, and detection performance of the single sequence is poor. In addition, using the sequence combination to carry the information about the cell ID carried in the SSS may cause a problem of a false cell ID or an invalid cell ID. For example, one sequence in the sequence combination is correctly received, and the other sequence is falsely detected as a sequence from a neighboring cell. When there is a Doppler frequency offset, correlation performance of a Golay sequence is degraded. Because the SSS needs to be detected under a specific frequency offset, when the Golay sequence is used to generate the SSS, detection performance of the sequence still has room for improvement.

In view of this, the solutions in embodiments of this application are provided. Embodiments of this application provide a sequence for SSS generation. Compared with a ZC sequence, an m-sequence, and a Golay sequence, the sequence provided in embodiments of this application may be considered as a new sequence, for example, referred to as a W sequence (Weil exponential sum sequence). A specific name of the sequence is not limited in embodiments of this application. The W sequence is a sequence that meets the following conditions: In a group of sequences, an ambiguity function of any sequence within a specific time-frequency offset range satisfies Weil's exponential sum bound, and a cross-ambiguity function between any two sequences satisfies Weil's exponential sum bound within a specific time-frequency offset range. The W sequence has better cross-ambiguity properties or better cross-correlation properties and better synchronization performance than the ZC sequence. The W-sequence has a longer length than the m-sequence. Therefore, even when the SSS carries a large amount of information, the information can still be carried in one sequence. In addition, the W sequence has a plurality of lengths, and an appropriate length may be selected based on bandwidth of the synchronization signal, thereby effectively utilizing the bandwidth and improving bandwidth utilization. Compared with the Golay sequence, the W sequence can still maintain good correlation properties when there is a specific frequency offset, thereby helping improve SSS detection performance.

For ease of understanding of the technical solutions provided in embodiments of this application, a principle according to which the W sequence may be used as an SSS sequence is first described.

As a part of a synchronization signal, an SSS is used for synchronization between devices. Correspondingly, auto-correlation performance of a sequence for SSS generation (also referred to as an SSS sequence) needs to be considered. Based on an SSS capacity requirement, cross-correlation performance of the SSS sequence further needs to be considered. In addition, because there is a frequency offset between a transmit end and a receive end, auto-correlation performance and cross-correlation performance of the SSS sequence within a specific frequency offset range need to be considered. The auto-correlation performance of the SSS sequence is equivalent to auto-ambiguity performance of the SSS sequence, and may be represented by using a maximum value that can be reached by an auto-correlation function of the SSS sequence. The auto-correlation performance of the SSS sequence within a specific frequency offset range may be represented by using a maximum value that can be reached by the auto-correlation function of the SSS sequence within a specific frequency offset range. The cross-correlation performance of the SSS sequence is equivalent to cross-ambiguity performance of the SSS sequence, and may be represented by using a maximum value that can be reached by a cross-correlation function of the SSS sequence. The cross-correlation performance of the SSS sequence within a specific frequency offset range may be represented by using a maximum value that can be reached by the cross-correlation function of the SSS sequence within a specific frequency offset range.

As described above, the W sequence means that, in a group of sequences, an auto-ambiguity function of any sequence within a specific time-frequency offset range satisfies Weil's exponential sum bound, and a cross-ambiguity function between any two sequences satisfies Weil's exponential sum bound within a specific time-frequency offset range. The auto-ambiguity function of a sequence within a specific time-frequency offset range satisfying Weil's exponential sum bound means that a maximum correlation value of the auto-ambiguity function of the sequence within a specific time-frequency offset range may reach a preset value. The cross-ambiguity function between two sequences within a specific time-frequency offset range satisfying Weil's exponential sum bound means that energy peak values of the cross-ambiguity function between the two sequences within a specific time-frequency offset range are not greater than a preset value.

For example, the W sequence *x(n)* satisfies $x \left(n\right) = {e}^{- j 2 π \left(\frac{f \left(n\right)}{N}\right)}$, where e is Euler's number, *f*(*n*) is a polynomial of degree x, x is greater than 2, *N* is a length of the sequence, and 0 ≤ n ≤ *N -* 1. Alternatively, the W sequence *x(n)* satisfies $x \left(n\right) = {e}^{- j 2 π \left(\frac{f \left(n\right)}{N}+\frac{cn}{M}\right)}$, where *e* is Euler's number, *f*(*n*) is a polynomial of degree x, x is greater than 2, *N* is a length of the sequence, 0 ≤ n ≤ *N - 1, M* is an integer, and c is an integer. M and *N* may be the same or different.

For ease of description, in embodiments of this application, an example in which the W sequence x(n) satisfies $x \left(n\right) = {e}^{- j 2 π \left(\frac{f \left(n\right)}{N}\right)}$ and x = 3 is used. Correspondingly, the W sequence is a polyphase sequence whose general term is ${e}^{- 2 πj \frac{\left({an}^{3}+{bn}^{2}+cn+d\right)}{N}}$. n represents a position of an element in the sequence, namely, an ordinal number of the element is in the sequence. If the sequence position number starts from 1, a value range of n is a positive integer greater than or equal to 1 and less than or equal to *N.* If the sequence position number starts from 0, a value range of n is a positive integer greater than or equal to 0 and less than or equal to *N - 1, a* is a coefficient of a term *n*³ in the general term, b is a coefficient of a term *n*² in the general term, c is a coefficient of a term *n*¹ in the general term, d is a constant, $j = \sqrt{- 1}$, and *a, b,* and c are all integers. N may be P or P*^{y}*, where P is a prime number, and y is a positive integer. Generally, when N is selected as a prime number, a normalized auto-correlation value between any W sequence and the W sequence with an arbitrary time offset and frequency offset may reach . In this way, there is a larger quantity of sequences that can be used as the PSS, thereby meeting a capacity requirement.

A W sequence A and a W sequence B are used as an example. When there is no time offset (time offset for short) or frequency offset (frequency offset for short) between the W sequence A and the W sequence B, correlation calculation is performed on the W sequence A and the W sequence B. It is assumed that correlation values are normalized. In this case, a maximum possible peak value of the normalized correlation values is 1. When the normalized correlation peak value is 1, it indicates that, after a relative shift in the correlation operation, the two sequences in an inner product operation are element-wise identical up to a coefficient of a constant term. It is assumed that the normalized correlation value between the W sequence A and the W sequence B is 1 when a cyclic shift of the W sequence A and the W sequence B is v, a relationship *a*(*n*) = *cb*(*n* + *v)* between the W sequence A (*a*(*n*)) and the W sequence B (*b*(*n*)) is true for any value of n, where c is a complex constant. After the correlation values are normalized, an inner product is calculated between the W sequence A and a version of the W sequence A whose time offset and frequency offset are not 0. In this case, the auto-ambiguity function of the W sequence A within a specific time-frequency offset range satisfies Weil's exponential sum bound. When N is a prime number, the W sequence A and a W sequence C are used as an example. When there is a specific time offset and/or a specific frequency offset between the W sequence A and the W sequence C, correlation calculation is performed on the W sequence A and the W sequence C, and an obtained normalized correlation value is $\frac{1}{\sqrt{N}}$. That is, an auto-ambiguity function of the W sequence A within a specific time-frequency offset range satisfies Weil's exponential sum bound.

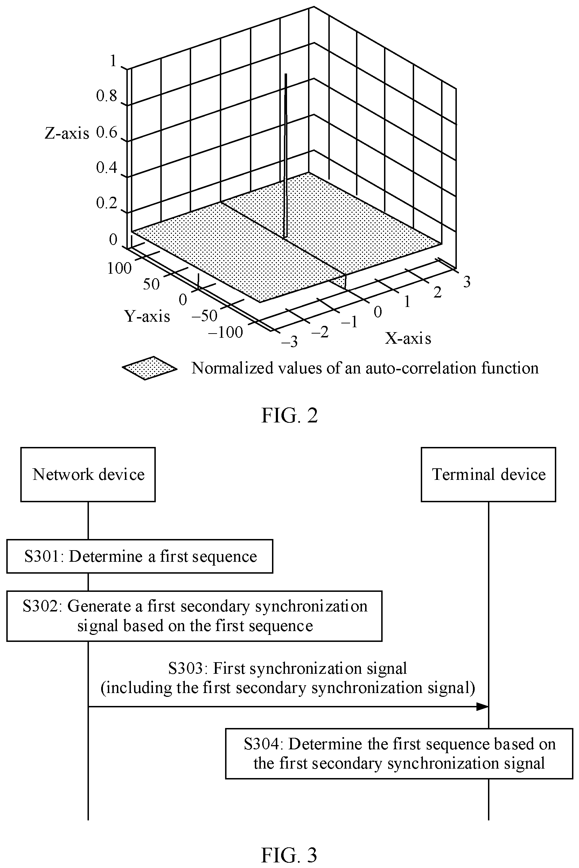

For example, FIG. 2 is a diagram of normalized values of an auto-ambiguity function of the W sequence. The W sequence in FIG. 2 is mapped onto a plurality of subcarriers of orthogonal frequency division multiplexing (orthogonal frequency division multiplexing, OFDM) in frequency domain. Unless otherwise specified, an example in which frequency domain mapping is performed on the sequence by using OFDM is used in this application. In FIG. 2, an x-axis represents a frequency offset, a y-axis represents a time-domain offset, and a z-axis represents a normalized correlation value. For example, a length of the W sequence is 127. In other words, the W sequence includes 127 elements. It can be learned from FIG. 2 that, when x = 0 and y = 0, that is, there is no time offset or frequency offset, a maximum normalized value on the z-axis is 1, and at a position other than x = 0 and y = 0, a maximum normalized value on the z-axis is .

In addition, energy peak values of a cross-ambiguity function between any two W sequences within a specific time-frequency offset range also satisfy Weil's exponential sum bound, or cross-correlation values between any two W sequences within a specific time-frequency offset range are not greater than a specific value. In this way, appropriate W sequences may be selected to generate PSSs, and different W sequences cause respectively generated PSSs not to interfere with each other, thereby helping increase a PSS capacity.

S₁ and S₂ are used as an example. It is assumed that S₁ satisfies ${S}_{1} = {e}^{- 2 πj \frac{\left({a}_{1}{n}^{3}+{b}_{1}{n}^{2}+{c}_{1}n+{d}_{1}\right)}{N}}$ , and S₂ satisfies ${S}_{2} = {e}^{- 2 πj \frac{\left({a}_{2}{n}^{3}+{b}_{2}{n}^{2}+{c}_{2}n+{d}_{2}\right)}{N}}$. When *a*₁ *≠ a*₂, normalized energy peak values of a cross-ambiguity function between S₁ and S₂ are not greater than $\frac{2}{\sqrt{N}}$. When *a*₁ = *a*₂ = *a*, and *b*₁ ≠ *b*₂, for example, it is assumed that *b*₁ > *b*₂, at a specific frequency offset position µ, a maximum normalized energy peak value, of the cross-ambiguity function between S₁ and S₂, that can be reached is 1. In other words, when the frequency domain offset is µ, there is a time domain offset position, and a correlation peak 1 is obtained at the position; and at a frequency offset position other than µ, the normalized energy peak value of the cross-ambiguity function between S₁ and S₂ is not greater than $\frac{1}{\sqrt{N}}$. It should be noted that, in this application, a frequency offset corresponding to a sequence is a signal form obtained by performing a cyclic shift on the sequence and then mapping a shifted sequence onto subcarriers in an OFDM system, and a time offset corresponds to a signal form obtained by performing OFDM frequency domain mapping on a sequence and then performing a cyclic shift in time domain on a corresponding signal. For another example, if µ satisfies (3*a* × µ) mod N = (*b*₁ - *b*₂) or (3*a* × µ) mod *N =* (*b*₂ *- b*₁), the maximum normalized energy peak value, of the cross-ambiguity function between S₁ and S₂, that can be reached is 1; and at a position other than µ, the normalized energy peak value of the cross-ambiguity function between S₁ and S₂ is not greater than $\frac{1}{\sqrt{N}}$. When *a*₁ *= a*₂ *= a*, *b*₁ = *b*₂ = *b, and c*₁ ≠ *c*₂, for example, it is assumed that *c*₁ > *c*₂, at a position with zero frequency offset and a time offset of τ, the maximum normalized energy peak value, of the cross-ambiguity function between S₁ and S₂, that can be reached is 1; and at another position, the normalized energy peak value of the cross-ambiguity function between S₁ and S₂ is not greater than $\frac{1}{\sqrt{N}}$. For example, when τ satisfies τ mod N = (c₁ - *c*₂), at a position with zero frequency offset and a time offset of τ, the maximum normalized energy peak value, of the cross-ambiguity function between S₁ and S₂, that can be reached is 1; and at another position, the normalized energy peak value of the cross-ambiguity function between S₁ and S₂ is not greater than $\frac{1}{\sqrt{N}}$. In this way, when there is a low PSS capacity requirement, two W sequences having a same cubic term coefficient may be selected, and appropriate quadratic term and linear term coefficients are selected, so that sidelobe peak values of the cross-ambiguity function between the two W sequences within a specific frequency offset range are not greater than $\frac{1}{\sqrt{N}}$, and PSSs generated by the two W sequences do not interfere with each other.

It should be noted that, in the foregoing description of the principle according to which the W sequence is used as the PSS sequence, signal oversampling is not taken into consideration for values of the ambiguity functions. In other words, the time offset corresponds to a cyclic shift in time domain by an integer quantity of sampling points of a non-oversampled signal; and the frequency offset corresponds to a frequency offset of a non-oversampled signal by an integer quantity of frequency domain subcarriers, that is, a sequence is mapped onto an OFDM symbol after being cyclically shifted in frequency domain by an integer quantity of subcarriers. When a signal is oversampled in time domain and/or frequency domain, the values of the ambiguity functions may be increased correspondingly compared with the case in which the signal is not oversampled. For a signal with a low sidelobe peak value of the ambiguity-function in the non-oversampled case, the sidelobe peak value of the ambiguity-function after oversampling may also be lower. The auto-ambiguity function is defined as values corresponding to positions other than the origin of an XY plane shown in FIG. 2, and the cross-ambiguity function is defined as the entire XY plane shown in FIG. 2.

It can be learned from the above that, the W sequence has better cross-ambiguity properties or better cross-correlation properties and better synchronization performance than the ZC sequence. Compared with the m-sequence, the W sequence has a plurality of lengths, and an appropriate length may be selected based on bandwidth of the synchronization signal, thereby effectively utilizing the bandwidth and improving bandwidth utilization. Compared with the quantity of Golay sequences, the quantity of W sequences is larger, thereby increasing the system capacity. Therefore, W sequences may be used as SSS sequences.

The following describes the solutions provided in embodiments of this application with reference to the accompanying drawings. The following description uses an example in which the communication method provided in embodiments of this application is applied to the network architecture shown in FIG. 1. A network architecture and an application scenario described in embodiments of this application are intended to describe the technical solutions in embodiments of this application more clearly, and do not constitute a limitation to the technical solutions provided in embodiments of this application. A person of ordinary skill in the art may learn that with evolution of the network architecture and emergence of new application scenarios, the technical solutions provided in embodiments of this application are also applicable to similar technical problems.

In embodiments of this application, (pre)configuration includes (pre)configuration of a network device. The (pre)configuration of the network device may be performed by using one or more of downlink control information (downlink control information, DCI), RRC signaling, and a MAC control element (control element, CE).

In embodiments of this application, "when", "as if', and "if' all mean that an apparatus performs corresponding processing in an objective case, are not intended to limit time, do not require the apparatus to necessarily have a determining action during implementation, and do not mean another limitation. Unless otherwise specified, "if' and "as if' are interchangeable, and "when" and "in the case of" are interchangeable. In addition, "when" and "if'/"as if' are interchangeable.

In addition, in embodiments of this application, the word "exemplary" or "for example" is used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

In embodiments of this application, "sending" and "receiving" represent signal transfer directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface by another unit or module. "Sending" may also be understood as "outputting" of a chip interface, and "receiving" may also be understood as "inputting" of the chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It can be understood that necessary processing, for example, encoding or modulation, may be performed on information between a source end that sends the information and a destination end, but the destination end can understand valid information from the source end. Similar descriptions in this application may be understood similarly, and details are not described again.

In embodiments of this application, unless otherwise specified, a quantity of nouns represents "a singular noun or a plural noun", that is, "one or more". "At least one" means one or more, and "a plurality of' means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one item (piece) of the following" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, the first sequence and the second sequence are two different sequences, and do not indicate different content, priorities, importance degrees, or the like of the two sequences. For a type of technical feature, technical features in the type of technical feature are distinguished by using "A", "B", "C", "D", and the like, and there is no sequence or magnitude order between the technical features described by "A", "B", "C", and "D". For example, the sequence A and the sequence B in this specification are merely used to distinguish between different sequences, and are not limited to a sequence or magnitude order between the sequence A and the sequence B, or priorities, importance degrees, or the like of the sequence A and the sequence B.

The following describes the communication method provided in embodiments of this application by using an example in which the communication method is performed by a network device and a terminal device. Steps performed by the network device may be implemented by a RAN device, or may be implemented by a component (for example, a module such as a baseband chip, or another processing unit or processor) in the RAN device. For example, the network device may be the network device in FIG. 1, for example, the network device 110a, or may be a chip (system) in the network device in FIG. 1. Steps performed by the terminal device may be implemented by the terminal device, or may be implemented by a component (for example, a module such as a chip, a processing unit, or a processor) in the terminal device. The terminal device may be the terminal device shown in FIG. 1, for example, the terminal device 120a, or may be a chip (system) in the terminal device in FIG. 1.

FIG. 3 is a schematic flowchart of the communication method according to an embodiment of this application. In FIG. 3, the method is described from a perspective of interaction between the network device and the terminal device. It should be understood that the communication method may alternatively be implemented by another apparatus, for example, performed by a chip or a communication apparatus having a communication function. It should be noted that this embodiment of this application performed by using the network device and the terminal device is merely an example, and is not limited to be performed by the network device and the terminal device. For example, this embodiment of this application may alternatively be performed by using more terminal devices. When more terminal devices are involved, all terminal devices in the more terminal devices perform a same procedure. As shown in FIG. 3, a procedure of the communication method includes the following steps.

S301: The network device determines a first sequence.

The first sequence may be used to generate a first SSS. The first sequence may be the W sequence, or the first sequence has same attributes as the W sequence. For example, an auto-ambiguity function of the first sequence within a specific time-frequency offset range satisfies Weil's exponential sum bound, and a cross-ambiguity function between the first sequence and any other sequence within a specific time-frequency offset range satisfies Weil's exponential sum bound, where the other sequence is similar to the first sequence.

When the network device needs to generate the first SSS, the network device may select a sequence from a sequence set as the first sequence, including but not limited to the following four cases.

Case 1: The first sequence belongs to a first sequence set. The first sequence set may be (pre)configured or predefined.

The first sequence set is a set including W sequences. For example, any sequence *x(n)* in the first sequence set satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$*.*

An auto-ambiguity function of any sequence in the first sequence set within a specific time-frequency offset range satisfies Weil's exponential sum bound and has good auto-correlation properties. Therefore, the network device may randomly select a sequence from the first sequence set to generate the first SSS. For example, the first sequence is an *i*^{th} sequence in the first sequence set, and *fᵢ*(*n*) corresponding to the first sequence satisfies *fᵢ*(*n*) = *aᵢn*³ + *bᵢn*² + *cᵢn + dᵢ*. The first sequence may be used to generate the first SSS.

In addition, a cross-ambiguity function between any two sequences in the first sequence set within a specific time-frequency offset range satisfies Weil's exponential sum bound and has good cross-correlation properties. Therefore, the network device may randomly select, from the first sequence set, sequences for SSS generation, and it can also be ensured that different SSSs do not interfere with each other. For example, the network device selects the *i*^{th} sequence from the first sequence set as the first sequence to generate the first SSS, where *fᵢ*(*n*) corresponding to the first sequence satisfies *fᵢ*(*n*) = *aᵢn*³ + *bᵢn*² + *cᵢn + dᵢ*; and the network device selects a *j*^{th} sequence from the first sequence set as a second sequence to generate a second SSS. *fⱼ*(*n*) corresponding to the second sequence satisfies *fⱼ*(*n*) = *aⱼn*³ *+ bⱼn*² *+ cⱼn + dⱼ,* where *aⱼ ≠ aᵢ*, so that a cross-ambiguity function between the first sequence and the second sequence within a specific time-frequency offset range satisfies Weil's exponential sum bound and has good cross-correlation properties.

Using the sequences in the first sequence set as SSS sequences provides better synchronization performance than using ZC sequences. Compared with an m-sequence, the first sequence is subject to fewer restrictions on length, so that bandwidth can be effectively utilized, thereby improving bandwidth utilization. Compared with the quantity of sequences in a Golay sequence pair/set, the quantity of first sequences is larger, thereby increasing the system capacity.

Case 2: The first sequence belongs to a second sequence set. The second sequence set may be (pre)configured or predefined.

The second sequence set includes a plurality of W sequences that satisfy a preset condition. For example, the plurality of sequences in the second sequence set have a same cubic term coefficient and different second term coefficients and/or linear term coefficients.

For example, the second sequence set includes the first sequence and the second sequence. The first sequence is an *i* ^{th} sequence in the second sequence set, and *fᵢ*(*n*) corresponding to the first sequence satisfies *fᵢ*(*n*) = *aᵢn*³ + *bᵢn*² + *cᵢn + dᵢ*. The second sequence is a *j*^{th} sequence in the second sequence set, and *fⱼ*(*n*) corresponding to the second sequence satisfies *fⱼ*(*n*) = *aⱼn*³ *+ bⱼn*² *+ cⱼn + dⱼ*, where *aᵢ = aⱼ = a*, and *bᵢ ≠ bⱼ,* so that sidelobe peak values of a cross-ambiguity function between the first sequence and the second sequence within a specific frequency offset range are not greater than $\frac{1}{\sqrt{N}}$, satisfying Weil's exponential sum bound. The second sequence set is more suitable for a scenario with a low SSS capacity requirement.

*bᵢ* and *bⱼ* satisfy µ > w, where w may indicate a preset frequency offset range, representing ±*w* subcarriers. Alternatively, *bᵢ* and *bⱼ* satisfy (3*a* × µ) mod *N =* (*bᵢ - bⱼ*) or (3*a* × µ) mod *N =* (*bⱼ - bᵢ*), where µ is greater than or equal to a constant, and µ > w. Alternatively, *bᵢ* and *bⱼ* satisfy (((((3*a*)^{*N-*2}*bᵢ*)*mod N) -* (((3*a*)^{*N-*2}*bⱼ*)*mod N*))*mod N*) > w. When a frequency offset between the second SSS and the first SSS is µ, the network device may select the first sequence to generate the first SSS, and select the second sequence to generate the second SSS.

Case 3: The first sequence belongs to a third sequence set. The third sequence set may be (pre)configured or predefined.

The third sequence set includes a plurality of W sequences that satisfy a preset condition. For example, the plurality of sequences in the second sequence set have a same cubic term coefficient and different second term coefficients and/or linear term coefficients.

For example, the second sequence set includes the first sequence and the second sequence. The first sequence is an *i*^{th} sequence in the second sequence set, and *fᵢ*(*n*) corresponding to the first sequence satisfies *fᵢ*(*n*) = *aᵢn*³ + *bᵢn*² + *cᵢn + dᵢ*. The second sequence is a *j*^{th} sequence in the second sequence set, and *fⱼ*(*n*) corresponding to the second sequence satisfies *fⱼ*(*n*) = *aⱼn*³ *+ bⱼn*² *+ cⱼn + dⱼ*, where *bᵢ = bⱼ = b,* and *cᵢ ≠ cⱼ*, so that normalized peak values of a cross-ambiguity function between the first sequence and the second sequence within a zero frequency offset and a specific time offset may reach 1, satisfying Weil's exponential sum bound.

The first sequence is used to generate the first SSS, and the second sequence is used to generate the second SSS. A frequency offset between the second SSS and the first SSS is 0. *cᵢ* and *cⱼ* satisfy τ mod *N =* (*cᵢ - cⱼ*), where τ is greater than or equal to a constant.

Optionally, (*cᵢ - cⱼ*) *> h*(*τ*)*,* where *cᵢ* is a linear term coefficient of the first sequence, *cⱼ* is a linear term coefficient of the second sequence, *h*(*τ*) is a linear function of τ, and τ is greater than or equal to a constant.

Case 4: The first sequence belongs to a fourth sequence set. The fourth sequence set may be (pre)configured or predefined.

The fourth sequence set includes sequences obtained by performing different cyclic shifts on a base sequence. The base sequence is a polynomial sequence whose general term is ${e}^{- j 2 π \left(\frac{f \left(n\right)}{N}\right)}$ *or* ${e}^{- j 2 π \left(\frac{f \left(n\right)}{N}+\frac{cn}{M}\right)}$. For example, any sequence in the first sequence set may be used as the base sequence. A cyclic shift corresponding to an *i*^{th} sequence in the fourth sequence set is *kᵢ.* For example, it is assumed that the first sequence is the *i*^{th} sequence in the fourth sequence set, and *fᵢ*(*n*) corresponding to the first sequence satisfies ${f}_{i} \left(n\right) = {am}_{i}^{3} + {bm}_{i}^{2} + {cm}_{i} + {d}_{i}$, where *mᵢ* = n - *kᵢ*, 0 ≤ *k*₁ *< k*₂ ... < *k*_{Q} ≤ *N -* 1, and Q represents a quantity of sequences included in the fourth sequence set. It is assumed that the second sequence is a *j*^{th} sequence in the fourth sequence set, and *fⱼ*(*n*) corresponding to the second sequence satisfies ${f}_{j} \left(n\right) = {am}_{j}^{3} + {bm}_{j}^{2} + {cm}_{j} + {d}_{j}$ , where *mⱼ* = *n - kⱼ.*

Using the sequences in the fourth sequence set as SSS sequences can ensure that, within a specific frequency offset range, normalized values of auto-ambiguity functions of all sequences and sidelobe peak values of a cross-ambiguity function between any two sequences may reach Weil's exponential sum bound. In this way, synchronization performance can be ensured when a frequency offset of initial synchronization is within a preset range.

For example, *kᵢ* corresponding to the first sequence and *kⱼ* corresponding to the second sequence satisfy ((*kᵢ - kⱼ*)*mod N) >* w, where w is an integer that may indicate a preset frequency offset range, representing ±*w* subcarriers. Optionally, adjacent *kᵢ* and *kⱼ* satisfy $\left({k}_{i}-{k}_{j}\right) mod N = \left⌊\frac{N}{\left⌈K/R\right⌉}\right⌋$ or $\left({k}_{i}-{k}_{j}\right) mod N = \left⌈\frac{N}{\left⌈K/R\right⌉}\right⌉$, and R represents a maximum quantity of sequences supported by changing a linear term while a same cubic term coefficient and a same quadratic term coefficient are used in the fourth sequence set. └ ┘ represents rounding down, and ┌ ┐ represents rounding up. In this way, within a larger frequency offset range, sidelobe peak values of the cross-ambiguity function between the first sequence and the second sequence may reach Weil's exponential sum bound. Therefore, better synchronization performance can also be ensured within the larger frequency offset range.

Optionally, all {*kᵢ*} values may be grouped. For example, a first group {*k*₀, *k*₁, *... , k*_{0*E*}}, a second group {*k*_{0*E+*1}*, k*_{0*E+*2}, ... , *k*_{1*E*}}, and the like. An *r*^{th} group may be represented as {*k*_{(*r-*1)*E+*1}*, k*_{(*r-*1)*E+*2}*, ... , k_{rE}*}*.* It is assumed that *k*_{(*r-*1)}*_{E+l} < k*_{(*r-*1)*E+l+*1} and *k*_{(*r-*1)}*_{E} < k*_{(*r-*1)*E+*1}, then |k_{(*r*-1)}*_{E+l} - k*_{(*r-*1)*E+l+*1}| = *q,* and |*k*_{*(r-*1)*E*} < *k*_{(*r*-1)*E*+1}| ≥ *q,* where *q* ≥ *2w.* In this way, more selectable quadratic term coefficients are available, and there is a cross-ambiguity function, between a sequence generated by using the selectable quadratic term coefficients and each SSS sequence, that reaches Weil's exponential sum bound $\frac{1}{\sqrt{N}}$ within a frequency offset range of w subcarriers.

Case 5: The first sequence belongs to a fifth sequence set. The fifth sequence set may be (pre)configured or predefined.

The fifth sequence set includes sequences obtained by adjusting linear term coefficients of a plurality of base sequences. The fifth sequence may be a sequence in the first sequence set, the second sequence set, the third sequence set, or the fourth sequence set. For example, the fifth sequence set includes G sequences, and the G sequences are obtained by adjusting linear terms of the G sequences in the first sequence set/the second sequence set/the third sequence set/the fourth sequence set. For example, the fifth sequence set is obtained by adjusting the linear terms of the G sequences in the first sequence set. A *i*^{th} sequence *xᵢ*(*n*) in the fifth sequence set satisfies ${x}_{i} \left(n\right) = {e}^{- j 2 π \left(\frac{{a}_{i} {n}^{3} + {b}_{i} {n}^{2} + {c}_{i} n + {d}_{i}}{N}\right)} \times {e}^{- j 2 π \left(\frac{{g}_{i} n}{M}\right)}$, and a *j*^{th} sequence *xⱼ*(*n*) in the fifth sequence set satisfies ${x}_{j} \left(n\right) = {e}^{- j 2 π \left(\frac{{a}_{j} {n}^{3} + {b}_{j} {n}^{2} + {c}_{j} n + {d}_{j}}{N}\right)} \times {e}^{- j 2 π \left(\frac{{g}_{j} n}{M}\right)}$, where M is an integer, and *gⱼ* is an integer. *gᵢ* and *gⱼ* may be the same or different.

Using the sequences in the fifth sequence set as SSS sequences can ensure that, within a specific frequency offset range, normalized values of auto-ambiguity functions of all sequences and sidelobe peak values of a cross-ambiguity function between any two sequences may reach Weil's exponential sum bound, thereby ensuring synchronization performance of initial synchronization with a frequency offset within a specific preset range.

In a possible implementation, at least one of the first sequence set to the fifth sequence set may be (pre)configured or predefined. Correspondingly, the terminal device may store at least one sequence set. When a plurality of sequence sets among the first sequence set to the fourth sequence set are (pre)configured or predefined, a sequence set with a highest priority may be selected based on priorities of the plurality of sequence sets, and then the first sequence is determined from the sequence set with the highest priority. Priorities of the sequence sets among the first sequence set to the fifth sequence set may be (pre)configured or predefined. For example, it is predefined that a priority of the fifth sequence set is higher than a priority of the fourth sequence set, the priority of the fourth sequence set is higher than a priority of the third sequence set, the priority of the third sequence set is higher than a priority of the second sequence set, and the priority of the second sequence set is higher than a priority of the first sequence set. The terminal device may also store priorities of the plurality of sequence sets.

S302: The network device generates the first secondary synchronization signal based on the first sequence.

After determining the first sequence, the network device may generate the first SSS based on the first sequence. In a possible implementation, the network device may process the first sequence, and generate the first SSS based on the processed first sequence. A manner of processing the first sequence is not limited in embodiments of this application, for example, includes but is not limited to the following manners.

### Manner 1: Performing truncation on the first sequence

For example, a first part is truncated from the first sequence. The first PSS may be generated based on the first part. For ease of description, the first part may be referred to as a fourth sequence. It may be understood that a length of the fourth sequence is less than a length of the first sequence, and a position of the fourth sequence in the first sequence is not limited in embodiments of this application. For example, a start position of the fourth sequence is a start position of the first sequence, or an end position of the fourth sequence is an end position of the first sequence.

In a possible implementation, the length of the fourth sequence and the start position of the fourth sequence may be (pre)configured or predefined; or the length of the fourth sequence and the end position of the fourth sequence may be (pre)configured or predefined; or the start position of the fourth sequence and the start position of the fourth sequence may be (pre)configured or predefined.

### Manner 2: Extending the first sequence through cyclic shift extension or zero padding

For example, a sequence obtained by performing cyclic shift extension on the first sequence is referred to as the fourth sequence. The fourth sequence is obtained by extending the first sequence through cyclic shift extension or zero padding. The length of the fourth sequence is greater than the length of the first sequence. In a possible implementation, the length and a cyclic shift of the fourth sequence may be (pre)configured or predefined.

### Manner 3: Extracting a part of elements from the first sequence, where the part of elements are a plurality of non-consecutive elements

For example, a sequence formed by the part of elements extracted from the first sequence is referred to as the fourth sequence. To be specific, the fourth sequence includes the plurality of non-consecutive elements or the plurality of partially consecutive elements in the first sequence. The length of the fourth sequence is less than the length of the first sequence. The plurality of partially consecutive elements include at least two adjacent consecutive elements. Alternatively, the plurality of partially consecutive elements include a plurality of element groups, where elements in some element groups are consecutive, and elements in some element groups are non-consecutive.

In a possible implementation, positions of the plurality of non-consecutive elements in the first sequence may be (pre)configured or predefined.

### Manner 4: Replacing a part of elements in the first sequence, for example, replacing the part of elements with 0

The part of elements may be a plurality of consecutive elements, or may be a plurality of non-consecutive elements. In a possible implementation, positions of the plurality of non-consecutive elements in the first sequence may be (pre)configured or predefined.

After determining the first sequence, the network device may process the first sequence in any one of Manner 1 to Manner 4, and generate the first SSS based on the obtained fourth sequence. A specific manner to be used is not limited in embodiments of this application. For example, a manner may be selected according to an actual requirement/application scenario. For example, when an actual quantity of subcarriers used for mapping is different from a quantity of subcarriers provided by a system for the synchronization signal, the quantity of subcarriers of the synchronization signal may be adjusted. If the actual quantity of subcarriers used for mapping is less than the quantity of subcarriers provided for the synchronization signal, Manner 2 may be used; otherwise, Manner 1 or Manner 3 may be used.

Optionally, a correspondence between a plurality of application scenarios and a plurality of manners may be (pre)configured or predefined, so that the network device may determine, based on the correspondence between the application scenarios and the plurality of manners, a manner to be actually used.

The network device generating the first SSS based on the first sequence includes mapping the first sequence onto a time-frequency resource. The solution provided in this embodiment of this application may be applied to a single-carrier system or an OFDM system. When the solution is applied to an OFDM system, the first sequence may be mapped onto a plurality of subcarriers of one time domain symbol. A specific manner of mapping the first sequence to the plurality of subcarriers is not limited in embodiments of this application.

For example, the first sequence may be mapped onto a plurality of contiguous subcarriers. For example, the length of the first sequence is 127. In this case, the first sequence may be mapped onto 127 contiguous subcarriers, where an *i*^{th} element in the first sequence is mapped onto an *i*^{th} subcarrier in the 127 subcarriers.

For another example, the first sequence may be mapped onto a plurality of non-contiguous subcarriers. For example, the length of the first sequence is 127. In this case, the first sequence may be mapped onto 127 non-contiguous subcarriers, where an *i*^{th} element in the first sequence is mapped onto a 2*i*-1^{th} subcarrier in a plurality of contiguous subcarriers. For example, the first element in the first sequence is mapped onto the first subcarrier in the plurality of contiguous subcarriers, and the second element in the first sequence is mapped onto the third subcarrier in the plurality of contiguous subcarriers.

S303: The network device sends a first synchronization signal. The first synchronization signal includes a first secondary synchronization signal.

It may be understood that the first synchronization signal is generated by a baseband chip of the network device. The network device sending the first synchronization signal includes: The baseband chip of the network device sends the first synchronization signal to a radio frequency chip of the network device. The network device sending the first synchronization signal further includes: The radio frequency chip of the network device sends the first synchronization signal to the terminal device. Correspondingly, the terminal device receives the first synchronization signal from the network device.

It may be understood that the first synchronization signal usually further includes a PSS. For example, the first synchronization signal further includes a first PSS. The network device may generate the PSS based on the sequence in the first sequence set, the second sequence set, the fourth sequence set, or the fifth sequence set. For example, the network device may generate the first PSS based on a third sequence, where the third sequence belongs to the first sequence set, the second sequence set, the fourth sequence set, or the fifth sequence set. *fᵢ*(*n*) corresponding to the first sequence satisfies *fᵢ*(*n*) = *aᵢn*³ + *bᵢn*² + *cᵢn + dᵢ,* and *f*(*n*) corresponding to the third sequence satisfies *f*(*n*) = *aₖn*³ + *bₖn*² *+ cₖn + dₖ.* In this case, *aᵢ ≠ aₖ*; or *aᵢ = aₙ = a*, and *bᵢ ≠ bₖ*; or *aᵢ = aₖ = a, bᵢ = bₖ = b,* and *cᵢ ≠ cₖ.* In this way, normalized peak values of a cross-ambiguity function between the first sequence and the second sequence within a zero frequency offset and a specific time offset may reach 1, satisfying Weil's exponential sum bound.

S304: The terminal device determines the first sequence based on the first secondary synchronization signal.

After receiving the first synchronization signal, the terminal device obtains the first secondary synchronization signal in the first synchronization signal, and then determines the first sequence based on the first secondary synchronization signal. The terminal device determines, based on the first secondary synchronization signal, that the first sequence is actually a sequence received by the terminal device through blind detection. Specifically, the terminal device performs correlation calculation on the received sequence and a locally stored reference sequence, and determines the received sequence based on a calculation result. For example, the terminal device determines, based on the first synchronization signal, a sequence set to which the first sequence belongs, and performs correlation calculation on the first secondary synchronization signal and sequences in the sequence set by using a sliding window of a preset length, to determine the first sequence based on the calculation result.

The communication method provides the W sequence that can be used as the PSS sequence. With good auto-correlation and cross-correlation properties, the W sequence provides better synchronization performance than the ZC sequence. Compared with an m-sequence, the W sequence is subject to fewer restrictions on length, and bandwidth can be effectively utilized, thereby improving bandwidth utilization. In addition, compared with the quantity of Golay sequences, the quantity of W sequences is larger, thereby increasing the system capacity.

In the foregoing embodiment provided in this application, the method provided in this embodiment of this application is described by using an example in which the network device and the terminal device perform the method. It should be understood that, in this application, embodiments may be independently implemented or may be implemented in combination based on some internal relationships. In each embodiment, different implementations may be implemented in combination or independently. To implement functions in the method provided in this embodiment of this application, the steps performed by the terminal device may be implemented by different functional entities included the terminal device. The steps performed by the network device may be implemented by different functional entities included in the network device. For example, the network device may be in a CU-DU architecture, the CU may generate the first synchronization signal, and the DU may send the first synchronization signal. To implement the functions in the method provided in the foregoing embodiment of this application, the terminal device and the network device may include a hardware structure and/or a software module, and the functions are implemented in a form of the hardware structure, the software module, or a combination of the hardware structure and the software module. Whether a function in the functions is performed by using the hardware structure, the software module, or the combination of the hardware structure and the software module depends on particular applications and design constraints of the technical solutions.

Based on a same inventive concept as the method embodiments, an embodiment of this application provides a communication apparatus. The following describes a communication apparatus for implementing the foregoing method in embodiments of this application with reference to the accompanying drawings. All the foregoing content may be used in the following embodiments. Repeated content is not described again.

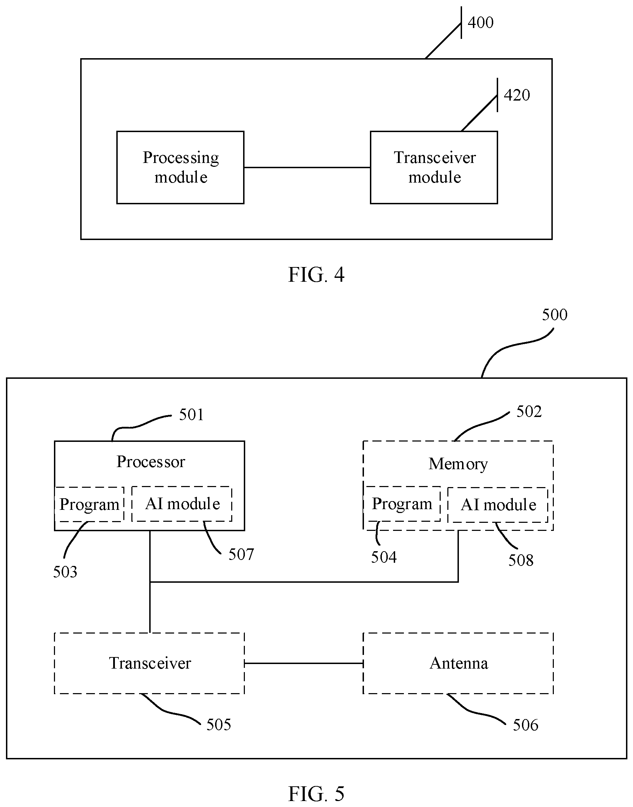

FIG. 4 is a schematic block diagram of a communication apparatus 400 according to an embodiment of this application. The communication apparatus 400 may be the terminal device or the network device in the foregoing embodiments. For example, the communication apparatus 400 may be the terminal device in FIG. 1, or the communication apparatus 400 is a chip (system) in the terminal device, or the communication apparatus 400 is a software module of the terminal device. The communication apparatus 400 may correspondingly implement functions or steps implemented by the terminal device in the foregoing method embodiments. For another example, the communication apparatus 400 may be the network device in FIG. 1, or the communication apparatus 400 is a chip (system) in the network device, or the communication apparatus 400 is a software module of the network device. The communication apparatus 400 may correspondingly implement functions or steps implemented by the network device in the foregoing method embodiments. The communication apparatus 400 may include a processing module 410 and a transceiver module 420. Optionally, a storage module may be further included. The storage module may be configured to store instructions (code or a program) and/or data. The storage module may be, for example, a memory. The processing module 410 and the transceiver module 420 may be coupled to the storage module. For example, the processing module 410 may read the instructions (code or program) and/or the data in the storage module, to implement a corresponding method. When the communication apparatus 400 is the chip in the terminal device or the network device, the storage module may be a storage module in the chip, for example, a register or a cache. For example, the storage module may alternatively be a storage module in the network device or the terminal device but outside the chip, for example, a read-only memory (read-only memory, ROM), another type of static storage device that can store static information and instructions, or a random access memory (random access memory, RAM). The foregoing units may be independently disposed, or may be partially or completely integrated.

The processing module 410 may be a processor or a controller, such as a general-purpose central processing unit (central processing module, CPU), a general-purpose processor, a digital signal processor (digital signal processing, DSP), an application specific integrated circuit (application specific integrated circuits, ASIC), a field programmable gate array (field programmable gate array, FPGA), or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 420 is a transceiver, an interface circuit, a bus, a pin, or another possible communication interface, and is configured to receive a signal from another apparatus. For example, when the apparatus is implemented in a form of chip, the transceiver module 420 is an interface circuit used by the chip to receive a signal from another chip or apparatus, or is an interface circuit used by the chip to send a signal to another chip or apparatus.

In an implementation, the communication apparatus 400 can correspondingly implement the behavior and the functions of the network device in the foregoing method embodiments. The communication apparatus 400 may be the network device, or may be a component (for example, a chip or a circuit) used in the network device, or may be a chip or a chip group in the network device or a part of a chip that is configured to perform a related method function, or may be a software module that can implement the method (for example, the communication method) performed by the network device in the foregoing method. This is not limited. For details, refer to the related content in any foregoing method embodiments. Details are not described herein again.

For example, the processing module 410 is configured to: determine a first sequence, generate a first secondary synchronization signal based on the first sequence, and send a first synchronization signal. The first synchronization signal includes the first secondary synchronization signal. The first sequence *x(n)* satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$ , where e is Euler's number, *f*(*n*) is a polynomial of degree x, x is greater than *2, N* is a length of the first sequence, 0 ≤ n ≤ *N - 1,* M is an integer, and c is an integer.

In an optional implementation, N is P or P*^{y}*, P is a prime number, and y is a positive integer.

In an optional implementation, the first synchronization signal further includes a first primary synchronization signal. The first primary synchronization signal is generated based on a third sequence. *f*(*n*) corresponding to the third sequence satisfies *f*(*n*) = *aₖn*³ + *bₖn*² *+ cₖn + dₖ*, where *aᵢ ≠ aₖ*; or *aᵢ = aₖ = a,* and *bᵢ ≠ bₖ*; or *aᵢ = aₖ = a, bᵢ = bₖ = b,* and *cᵢ ≠ cₖ.*

In a possible implementation, *bᵢ* and *bₖ* satisfy (3*a* × µ) mod *N* = (*bᵢ - bₖ*) or (3*a* × µ) mod *N =* (*bₖ* - *bᵢ*), where µ is greater than or equal to a constant.

In an optional implementation, µ represents a frequency offset between the first secondary synchronization signal and the first primary synchronization signal.

In an optional implementation, the first sequence is an *i*^{th} sequence in a fourth sequence set. *fᵢ*(*n*) corresponding to the first sequence satisfies ${f}_{i} \left(n\right) = {am}_{i}^{3} + {bm}_{i}^{2} + {cm}_{i} +$ *dᵢ*, where *mᵢ* = n - *ki*, and 0 ≤ *k*₁ < *k*₂ .... < *k*_{Q} ≤ *N - 1,* and Q represents a quantity of sequences included in the fourth sequence set.

In an optional implementation, *kᵢ* corresponding to the first sequence and *kⱼ* corresponding to the second sequence satisfy ((*kᵢ - kⱼ*)*mod N) >* w. The second sequence is a *j*^{th} sequence in the fourth sequence set, and w is an integer.

In an optional implementation, the first sequence is an *i*^{th} sequence in a fifth sequence set, and the first sequence *xᵢ*(*n*) satisfying ${x}_{i} \left(n\right) = {e}^{- j 2 π \left(\frac{{f}_{i} \left(n\right)}{N}+\frac{cn}{M}\right)}$ includes: The first sequence *xᵢ*(*n*) satisfies ${x}_{i} \left(n\right) = {e}^{- j 2 π \left(\frac{{a}_{i} {n}^{3} + {b}_{i} {n}^{2} + {c}_{i} n + {d}_{i}}{N}\right)} \times {e}^{- j 2 π \left(\frac{{g}_{i} n}{M}\right)}$, where M is an integer, and *gᵢ* is an integer.

In an optional implementation, the first sequence belongs to a first sequence set. The first sequence set further includes a second sequence. The second sequence is used to generate a second secondary synchronization signal. *fᵢ*(*n*) corresponding to the first sequence satisfies *fᵢ*(*n*) = *aᵢn*³ *+bᵢn*² *+ cᵢn + dᵢ*; and *fⱼ*(*n*) corresponding to the second sequence satisfies *fⱼ*(*n*) = *aⱼn*³ *+ bⱼn*² *+ cⱼn + dⱼ*, where *aⱼ ≠ aᵢ.*

In an optional implementation, the first sequence belongs to a second sequence set. The second sequence set further includes a second sequence. The second sequence is used to generate a second secondary synchronization signal. *fᵢ*(*n*) corresponding to the first sequence satisfies *fᵢ*(*n*) = *aᵢn*³ + *bᵢn*² + *cᵢn + dᵢ*; and *fⱼ*(*n*) corresponding to the second sequence satisfies *fⱼ*(*n*) = *aⱼn*³ *+ bⱼn*² *+ cⱼn + dⱼ*, where *aᵢ = aⱼ = a,* and *bᵢ ≠ bⱼ.*

In a possible implementation, *bᵢ* and *bⱼ* satisfy (3*a* × µ) *mod N =* (*bᵢ - bⱼ*) or (3*a* × µ) mod *N =* (*bⱼ* - *bᵢ*), where µ is greater than or equal to a constant.

In an optional implementation, the first sequence belongs to a third sequence set. The third sequence set further includes a second sequence. The second sequence is used to generate a second secondary synchronization signal. *fᵢ*(*n*) corresponding to the first sequence satisfies *fᵢ*(*n*) = *aᵢn*³ + *bᵢn*² + *cᵢn + dᵢ*; and *fⱼ*(*n*) corresponding to the second sequence satisfies *fⱼ*(*n*) = *aⱼn*³ *+ bⱼn*² *+ cⱼn + dⱼ,* where *aᵢ = aⱼ = a, bᵢ* = *bⱼ* = *b*, and *cᵢ ≠ cⱼ.*

In an optional implementation, the frequency offset between the second secondary synchronization signal and the first secondary synchronization signal is 0, *cᵢ* and *cⱼ* satisfy τ mod *N =* (*cᵢ - cⱼ*), where τ is greater than or equal to a constant.

In an optional implementation, (*cᵢ - cⱼ*) *> h*(*τ*)*,* where *cᵢ* is a linear term coefficient of the first sequence, *cⱼ* is a linear term coefficient of the second sequence, *h*(*τ*) is a linear function of τ, and τ is greater than or equal to a constant.

In an optional implementation, the processing module 410 is specifically configured to generate the first secondary synchronization signal based on at least two sequences. The at least two sequences include the first sequence.

In an optional implementation, the processing module 410 is specifically configured to generate the first secondary synchronization signal based on a fourth sequence. The fourth sequence is a first part of the first sequence; or the fourth sequence is obtained by extending the first sequence through cyclic shift extension or zero padding, and a length of the fourth sequence is greater than the length of the first sequence; or the fourth sequence includes a plurality of non-consecutive elements or a plurality of partially consecutive elements in the first sequence; or the fourth sequence is obtained by changing values of a part of elements in the first sequence to 0. The plurality of partially consecutive elements means that a part of elements in the plurality of elements are consecutive, and a part of elements are non-consecutive.

In an implementation, the communication apparatus 400 can correspondingly implement the behavior and the functions of the terminal device in the foregoing method embodiments. The communication apparatus 400 may be the terminal device, or may be a component (for example, a chip or a circuit) used in the terminal device, or may be a chip or a chip group in the terminal device or a part of a chip that is configured to perform a related method function, or may be a software module that can implement the method (for example, the communication method) performed by the terminal device in the foregoing method. This is not limited. For details, refer to the related content in any foregoing method embodiments. Details are not described herein again.

For example, the transceiver module 420 is configured to receive a first synchronization signal. The first synchronization signal includes a first secondary synchronization signal. The processing module 410 is configured to determine a first sequence based on the first secondary synchronization signal. The first sequence *x(n)* satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$, where e is Euler's number, *f*(*n*) is a polynomial of degree x, x is greater than 2, *N* is a length of the first sequence, 0 ≤ n ≤ *N - 1,* M is an integer, and c is an integer.

In an optional implementation, N is P or P*^{y}*, P is a prime number, and y is a positive integer.

In an optional implementation, the first synchronization signal further includes a first primary synchronization signal. The first primary synchronization signal is generated based on a third sequence. *f*(*n*) corresponding to the third sequence satisfies *f*(*n*) = *aₖn*³ + *bₖn*² *+ cₖn* + *dₖ*, where *aᵢ* ≠ *aₖ*; or *aᵢ = aₖ = a,* and *bᵢ* ≠ *bₖ*; or *aᵢ = aₖ = a, bᵢ = bₖ = b,* and *cᵢ* ≠ *cₖ.*

In a possible implementation, *bᵢ* and *bₖ* satisfy (3*a* × µ) mod *N* = (*bᵢ - bₖ*) or (3*a* × µ) mod *N =* (*bₖ* - *bᵢ*), where µ is greater than or equal to a constant.

In an optional implementation, µ represents a frequency offset between the first secondary synchronization signal and the first primary synchronization signal.

In an optional implementation, the first sequence is an *i*^{th} sequence in a fourth sequence set. *fᵢ*(*n*) corresponding to the first sequence satisfies ${f}_{i} \left(n\right) = {am}_{i}^{3} + {bm}_{i}^{2} + {cm}_{i} + {d}_{i}$ , where *mᵢ* = n - *kᵢ,* and 0 ≤ *k*₁ < *k*₂ ... . < *k_{Q}* ≤ *N - 1,* and Q represents a quantity of sequences included in the fourth sequence set.

In an optional implementation, *kᵢ* corresponding to the first sequence and *kⱼ* corresponding to the second sequence satisfy ((*kᵢ - kⱼ*) *mod N)* > w. The second sequence is a *j*^{th} sequence in the fourth sequence set, and w is an integer.

In an optional implementation, the first sequence is an *i*^{th} sequence in a fifth sequence set, and the first sequence *xᵢ*(*n*) satisfying ${x}_{i} \left(n\right) = {e}^{- j 2 π \left(\frac{{f}_{i} \left(n\right)}{N}+\frac{cn}{M}\right)}$ includes: The first sequence *xᵢ*(*n*) satisfies ${x}_{i} \left(n\right) = {e}^{- j 2 π \left(\frac{{a}_{i} {n}^{3} + {b}_{i} {n}^{2} + {c}_{i} n + {d}_{i}}{N}\right)} \times {e}^{- j 2 π \left(\frac{{g}_{i} n}{M}\right)}$, where M is an integer, and *gᵢ* is an integer.

In an optional implementation, the first sequence belongs to a first sequence set. The first sequence set further includes a second sequence. The second sequence is used to generate a second secondary synchronization signal. *fᵢ*(*n*) corresponding to the first sequence satisfies *fᵢ*(*n*) = *aᵢn*³ *+ bᵢn*² *+ cᵢn + dᵢ*; and *fⱼ*(*n*) corresponding to the second sequence satisfies *fⱼ*(*n*) = *aⱼn*³ *+ bⱼn*² *+ cⱼn + dⱼ,* where *aⱼ* ≠ *aᵢ.*

In an optional implementation, the first sequence belongs to a second sequence set. The second sequence set further includes a second sequence. The second sequence is used to generate a second secondary synchronization signal. *fᵢ*(*n*) corresponding to the first sequence satisfies *fᵢ*(*n*) = *aᵢn*³ + *bᵢn*² + *cᵢn + dᵢ*; and *fⱼ*(*n*) corresponding to the second sequence satisfies *fⱼ*(*n*) = *aⱼn*³ *+ bⱼn*² *+ cⱼn + dⱼ,* where *aᵢ = aⱼ = a,* and *bᵢ* ≠ *bⱼ.*

In a possible implementation, *bᵢ* and *bⱼ* satisfy (3*a* × µ) mod *N =* (*bᵢ - bⱼ*) or (3*a* × µ) mod *N =* (*bⱼ* - *bᵢ*), where µ is greater than or equal to a constant.

In an optional implementation, the first sequence belongs to a third sequence set. The third sequence set further includes a second sequence. The second sequence is used to generate a second secondary synchronization signal. *fᵢ*(*n*) corresponding to the first sequence satisfies *fᵢ*(*n*) = *aᵢn*³ + *bᵢn*² + *cᵢn + dᵢ*; and *fⱼ*(*n*) corresponding to the second sequence satisfies *fⱼ*(*n*) = *aⱼn*³ *+ bⱼn*² *+ cⱼn + dⱼ,* where *aᵢ = aⱼ = a*, *bᵢ = bⱼ = b*, and *cᵢ* ≠ *cⱼ.*

In an optional implementation, the frequency offset between the second secondary synchronization signal and the first secondary synchronization signal is 0, *cᵢ* and *cⱼ* satisfy τ mod *N =* (*cᵢ - cⱼ*), where τ is greater than or equal to a constant.

In an optional implementation, (*cᵢ - cⱼ*) *> h*(*τ*)*,* where *cᵢ* is a linear term coefficient of the first sequence, *cⱼ* is a linear term coefficient of the second sequence, *h*(*τ*) is a linear function of τ, and τ is greater than or equal to a constant.

In an optional implementation, the first secondary synchronization signal is generated based on at least two sequences. The at least two sequences include the first sequence.

In an optional implementation, the processing module 410 is specifically configured to determine a fourth sequence based on the first secondary synchronization signal. The fourth sequence is a first part of the first sequence; or the fourth sequence is obtained by extending the first sequence through cyclic shift extension or zero padding, and a length of the fourth sequence is greater than the length of the first sequence; or the fourth sequence includes a plurality of non-consecutive elements or a plurality of partially consecutive elements in the first sequence; or the fourth sequence is obtained by changing values of a part of elements in the first sequence to 0. The plurality of partially consecutive elements means that a part of elements in the plurality of elements are consecutive, and a part of elements are non-consecutive.

When the communication apparatus 400 is a chip-type apparatus or circuit, the transceiver module may be an input/output circuit and/or a communication interface, and the processing module is an integrated processor, a microprocessor, or an integrated circuit.

FIG. 5 is a block diagram of a communication apparatus 500 according to an embodiment of this application. The communication apparatus 500 may be the terminal device or the network device in the foregoing embodiments. For example, the communication apparatus 500 may be the terminal device in FIG. 1 or a chip (system) in the terminal device. In this embodiment of this application, the chip system may include a chip, or may include a chip and another discrete component. For specific functions, refer to the descriptions of the foregoing method embodiments. For another example, the communication apparatus 500 may be the network device in FIG. 1 or a chip (system) in the network device. In this embodiment of this application, the chip system may include a chip, or may include a chip and another discrete component. For specific functions, refer to the descriptions of the foregoing method embodiments.

The communication apparatus 500 includes one or more processors 501, configured to implement or support the communication apparatus 500 in implementing functions of the terminal device or the network device in the method provided in embodiments of this application. For details, refer to the detailed descriptions in the method example. Details are not described herein again. The processor 501 may also be referred to as a processing unit or a processing module, and may implement a specific control function. The processor 501 may be a general-purpose processor, a dedicated processor, or the like. For example, the processor includes a baseband processor, a central processing unit, an application processor, a modem processor, a graphics processing unit, an image signal processor, a digital signal processor, a video codec processor, a controller, a memory, a neural-network processing unit, and/or the like. The baseband processor may be configured to process a communication protocol and communication data. The central processing unit may be configured to control the communication apparatus 500 (for example, the network device or the terminal device), and execute a software program and/or process data. Different processors may be independent components, or may be integrated into one or more processors, for example, integrated into one or more application-specific integrated circuits.

In a design, the processor 501 may include a program 503 (or referred to as code or instructions). The program 503 may be run on the processor 501, to enable the communication apparatus 500 to perform the method described in the foregoing embodiments. In another possible design, the communication apparatus 500 includes a circuit (not shown in FIG. 5). The circuit is configured to implement functions of the terminal device or the network device in the foregoing embodiments.

In a possible design, the communication apparatus 500 may include one or more memories 502, and a program 504 (or referred to as code or instructions) is stored in the memory 502. The program 504 may be run on the processor 501, to enable the communication apparatus 500 to perform the method described in the foregoing method embodiments.

In a design, the processor 501 and/or the memory 502 may include an artificial intelligence (artificial intelligence, AI) module 507 and an AI module 508. The AI module is configured to implement an AI-related function. The AI module may be implemented by using software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 501 and/or the memory 502 may further store data. The processor and the memory may be separately disposed, or may be integrated together.

In a possible design, the communication apparatus 500 may further include a transceiver 505 and/or an antenna 506. The processor 501 may also be sometimes referred to as a processing unit, and controls the communication apparatus 500. The transceiver 505 may also be sometimes referred to as a transceiver unit, a transceiver, a transceiver circuit, a transceiver, or the like, and is configured to implement receiving and sending functions of the communication apparatus 500 through the antenna 506.

In a possible design, the communication apparatus 500 may further include one or more of the following components: a wireless communication module, an audio module, an interface for external memory, an internal memory, a universal serial bus (universal serial bus, USB) interface, a power management module, an antenna, a speaker, a microphone, an input/output module, a sensor module, a motor, a camera, a display, or the like. It may be understood that in some embodiments, the communication apparatus 500 may include more or fewer components, or some components are integrated, or some components are split. These components may be implemented by hardware, software, or a combination of software and hardware.

The communication apparatus in the foregoing embodiments may be a terminal device, may be a circuit, or may be a chip used in a terminal device, or another combined part, component, or the like that has a function of the terminal device. Alternatively, the communication apparatus in the foregoing embodiments may be a network device, may be a circuit, or may be a chip used in a network device, or may be another combined part or component that has the network device. When the communication apparatus is a terminal device or a network device, the transceiver module may be a transceiver, and may include an antenna, a radio frequency circuit, and the like, and the processing module may be a processor, for example, a CPU. When the communication apparatus is a chip system, the communication apparatus may be an FPGA, a dedicated ASIC, a system on chip (system on chip, SoC), a CPU, a network processor (network processor, NP), a DSP, a microcontroller unit (microcontroller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in a memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and a transceiver machine.

An embodiment of this application further provides a communication system. Specifically, the communication system includes at least one terminal device and at least one network device. The terminal device is a terminal device configured to implement functions related to the foregoing communication method, and the network device is a network device configured to implement functions related to the foregoing communication method. For details, refer to related descriptions in the foregoing method embodiments. Details are not described herein again.

An embodiment of this application further provides a computer-readable storage medium, including instructions. When the instructions are run on a computer, the computer is enabled to perform the method performed by the terminal device or the network device in the foregoing communication method.

An embodiment of this application further provides a computer program product, including computer program code. When the computer program code is run, a computer is enabled to perform the method performed by the terminal device or the network device in the foregoing communication method.

An embodiment of this application provides a chip system. The chip system includes a processor and may further include a memory, and is configured to implement functions of the terminal device or the network device in the foregoing method 400. The chip system may include a chip, or may include a chip and another discrete component.

To implement the functions of the communication apparatuses in FIG. 4 to FIG. 5, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, illustrative logical blocks (illustrative logical blocks) and steps (steps) described in combination with embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
determining a first sequence, wherein the first sequence *x(n)* satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$, *e* is Euler's number, *f*(*n*) is a polynomial of degree *x, x* is greater than 2, *N* is a length of the first sequence, 0 ≤ n ≤ *N - 1,* M is an integer, and c is an integer;
generating a first secondary synchronization signal based on the first sequence; and
sending a first synchronization signal, wherein the first synchronization signal comprises the first secondary synchronization signal.

2. The method according to claim 1, wherein N is P or P*^{y}*, P is a prime number, and y is a positive integer.

3. The method according to claim 1 or 2, wherein the first synchronization signal further comprises a first primary synchronization signal, the first primary synchronization signal is generated based on a third sequence, and *f*(*n*) corresponding to the third sequence satisfies *f*(*n*) = *aₖn*³ + *bₖn*² *+ cₖn + dₖ,* wherein
*aᵢ* ≠ *aₖ*; or *aᵢ = aₖ = a,* and *bᵢ* ≠ *bₖ*; or *aᵢ = aₖ = a, bᵢ = bₖ* = b, and *cᵢ* ≠ *cₖ.*

4. The method according to claim 3, wherein *bᵢ* and satisfy (3*a* × µ) mod *N =* (*bᵢ - bₖ*) or (3*a* × µ) mod *N =* (*bₖ* - *bᵢ*), and µ is greater than or equal to a constant.

5. The method according to claim 4, wherein µ is a frequency offset between the first secondary synchronization signal and the first primary synchronization signal.

6. The method according to claim 1 or 2, wherein the first sequence is an *i*^{th} sequence in a fourth sequence set, *fᵢ*(*n*) corresponding to the first sequence satisfies ${f}_{i} \left(n\right) = {am}_{i}^{3} + {bm}_{i}^{2} + {cm}_{i} + {d}_{i}$ *, mᵢ = n - kᵢ,* and 0 ≤ *k*₁ < *k*₂ .... < *k_{Q}* ≤ *N - 1,* and Q represents a quantity of sequences comprised in the fourth sequence set.

7. The method according to claim 6, wherein *kᵢ* corresponding to the first sequence and *kⱼ* corresponding to a second sequence satisfy ((*kᵢ - kⱼ*) mod *N)* > w, the second sequence is a *j*^{th} sequence in the fourth sequence set, and w is an integer.

8. The method according to claim 6, wherein *kᵢ* corresponding to the first sequence and *kⱼ* corresponding to a second sequence satisfy:
$\left({k}_{i}-{k}_{j}\right) mod N = \left⌊\frac{N}{\left⌈K/R\right⌉}\right⌋$ or $\left({k}_{i}-{k}_{j}\right) mod N = \left⌈\frac{N}{\left⌈K/R\right⌉}\right⌉$, wherein └ ┘ represents rounding down, ┌ ┐ represents rounding up, and R represents a maximum quantity of sequences supported by changing a linear term while a same cubic term coefficient and a same quadratic term coefficient are used in the fourth sequence set.

9. The method according to claim 1 or 2, wherein the first sequence is an *i*^{th} sequence in a fifth sequence set, and that the first sequence *xᵢ*(*n*) satisfies ${x}_{i} \left(n\right) = {e}^{- j 2 π \left(\frac{{f}_{i} \left(n\right)}{N}+\frac{cn}{M}\right)}$ comprises:
the first sequence *xᵢ*(*n*) satisfies ${x}_{i} \left(n\right) = {e}^{- j 2 π \left(\frac{{a}_{i} {n}^{3} + {b}_{i} {n}^{2} + {c}_{i} n + {d}_{i}}{N}\right)} \times {e}^{- j 2 π \left(\frac{{g}_{i} n}{M}\right)}$, wherein M is an integer, and *gᵢ* is an integer.

10. The method according to claim 1 or 2, wherein the first sequence belongs to a first sequence set, the first sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) = *aⱼn*³ + *bⱼn*² *+ cⱼn + dⱼ,* wherein *aⱼ* ≠ *aᵢ.*

11. The method according to claim 1 or 2, wherein the first sequence belongs to a second sequence set, the second sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) *= aⱼn*³ + *bⱼn*² *+ cⱼn + dⱼ,* wherein *aᵢ = aⱼ = a,* and *bᵢ* ≠ *bⱼ.*

12. The method according to claim 11, wherein *bᵢ* and *bⱼ* satisfy (3*a* × µ) mod *N =* (*bᵢ - bⱼ*) or (3*a* × µ) mod *N =* (*bⱼ* - *bᵢ*), and µ is greater than or equal to a constant.

13. The method according to claim 1 or 2, wherein the first sequence belongs to a third sequence set, the third sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) = *aⱼn*³ + *bⱼn*² *+ cⱼn + dⱼ,* wherein *aᵢ = aⱼ = a, bᵢ = bⱼ* = b, and *cᵢ* ≠ *cⱼ.*

14. The method according to claim 13, wherein a frequency offset between the second secondary synchronization signal and the first secondary synchronization signal is 0, *cᵢ* and *cⱼ* satisfy τ mod *N =* (*cᵢ - cⱼ*), and τ is greater than or equal to a constant.

15. The method according to claim 13 or 14, wherein (*cᵢ - cⱼ*) *> h*(τ), *cᵢ* is a linear term coefficient of the first sequence, *cⱼ* is a linear term coefficient of the second sequence, *h*(τ) is a linear function of τ, and τ is greater than or equal to a constant.

16. The method according to any one of claims 1 to 15, wherein generating the first secondary synchronization signal based on the first sequence comprises:
generating the first secondary synchronization signal based on at least two sequences, wherein the at least two sequences comprise the first sequence.

17. The method according to any one of claims 1 to 16, wherein generating the first secondary synchronization signal based on the first sequence comprises:
generating the first secondary synchronization signal based on a fourth sequence, wherein the fourth sequence is a first part of the first sequence; or
the fourth sequence is obtained by extending the first sequence through cyclic shift or zero padding, and a length of the fourth sequence is greater than the length of the first sequence; or
the fourth sequence consists of a plurality of non-consecutive elements or a plurality of partially consecutive elements in the first sequence; or
the fourth sequence is obtained by changing values of a part of elements in the first sequence to 0.

18. A communication method, comprising:
receiving a first synchronization signal, wherein the first synchronization signal comprises a first secondary synchronization signal; and
determining a first sequence *x(n)* based on the first secondary synchronization signal, wherein the first sequence satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$, *e* is Euler's number, *f*(*n*) is a polynomial of degree x, x is greater than 2, *N* is a length of the first sequence, 0 ≤ n ≤ *N -* 1, *M* is an integer, and c is an integer.

19. The method according to claim 18, wherein N is P or P*^{y}*, P is a prime number, and y is a positive integer.

20. The method according to claim 18 or 19, wherein the first synchronization signal further comprises a first primary synchronization signal, the first primary synchronization signal is generated based on a third sequence, and *f*(*n*) corresponding to the third sequence satisfies *f*(*n*) = *aₖn*³ + *bₖn*² *+ cₖn + dₖ*; and
*aᵢ* ≠ *aₖ*; or *aᵢ = aₖ = a,* and *bᵢ* ≠ *bₖ*; or *aᵢ = aₖ = a, bᵢ = bₖ* = b, and *cᵢ* ≠ *cₖ.*

21. The method according to claim 20, wherein *bᵢ* and *bₖ* satisfy (3*a* × µ) mod *N =* (*bᵢ - bₖ*) or (3*a* × µ) mod *N =* (*bₖ* - *bᵢ*), and µ is greater than or equal to a constant.

22. The method according to claim 21, wherein µ is a frequency offset between the first secondary synchronization signal and the first primary synchronization signal.

23. The method according to claim 18 or 19, wherein the first sequence is an *i*^{th} sequence in a fourth sequence set, *fᵢ*(*n*) corresponding to the first sequence satisfies ${f}_{i} \left(n\right) = {am}_{i}^{3} + {bm}_{i}^{2} + {cm}_{i} + {d}_{i}$ *, mᵢ* = n - *kᵢ,* and 0 ≤ *k*₁ < *k*₂ .... < *k_{Q}* ≤ *N - 1,* and Q represents a quantity of sequences comprised in the fourth sequence set.

24. The method according to claim 23, wherein *kᵢ* corresponding to the first sequence and *kⱼ* corresponding to the second sequence satisfy ((*kᵢ - kⱼ*) mod *N)* > w, the second sequence is a *j*^{th} sequence in the fourth sequence set, and w is an integer.

25. The method according to claim 23, wherein *kᵢ* corresponding to the first sequence and *kⱼ* corresponding to the second sequence satisfy: $\left({k}_{i}-{k}_{j}\right) mod N = \left⌊\frac{N}{\left⌈K/R\right⌉}\right⌋$ or $\left({k}_{i}-{k}_{j}\right) mod N = \left⌈\frac{N}{\left⌈K/R\right⌉}\right⌉$, wherein └ ┘ represents rounding down, ┌ ┐ represents rounding up, and R represents a maximum quantity of sequences supported by changing a linear term while a same cubic term coefficient and a same quadratic term coefficient are used in the fourth sequence set.

26. The method according to claim 18 or 19, wherein the first sequence is an *i*^{th} sequence in a fifth sequence set, and that the first sequence *xᵢ*(*n*) satisfies ${x}_{i} \left(n\right) = {e}^{- j 2 π \left(\frac{{f}_{i} \left(n\right)}{N}+\frac{cn}{M}\right)}$ comprises:
the first sequence *xᵢ*(*n*) satisfies ${x}_{i} \left(n\right) = {e}^{- j 2 π \left(\frac{{a}_{i} {n}^{3} + {b}_{i} {n}^{2} + {c}_{i} n + {d}_{i}}{N}\right)} \times {e}^{- j 2 π \left(\frac{{g}_{i} n}{M}\right)}$, wherein M is an integer, and *gᵢ* is an integer.

27. The method according to claim 18 or 19, wherein the first sequence belongs to a first sequence set, the first sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) = *aⱼn*³ + *bⱼn*² + *cⱼn + dⱼ ,* wherein *aⱼ* ≠ *aᵢ.*

28. The method according to claim 18 or 19, wherein the first sequence belongs to a second sequence set, the second sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) = *aⱼn*³ + *bⱼn*² *+ cⱼn + dⱼ ,* wherein *aᵢ = aⱼ = a,* and *bᵢ* ≠ *bⱼ.*

29. The method according to claim 28, wherein *bᵢ* and *bⱼ* satisfy (3*a* × µ) mod *N =* (*bᵢ - bⱼ*) or (3a × µ) mod *N = (bⱼ* - *bᵢ*), and µ is greater than or equal to a constant.

30. The method according to claim 18 or 19, wherein the first sequence belongs to a third sequence set, the third sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn + dᵢ*; and
*fⱼ*(*n*) corresponding to the second sequence satisfies *fⱼ*(*n*) = *aⱼn*³ *+ bⱼn*² *+ cⱼn + dⱼ,* wherein *aᵢ = aⱼ = a, bᵢ = bⱼ* = b, and *cᵢ* ≠ *cⱼ.*

31. The method according to claim 30, wherein a frequency offset between the second secondary synchronization signal and the first secondary synchronization signal is 0, *cᵢ* and *cⱼ* satisfy τ mod *N =* (*cᵢ - cⱼ*), and τ is greater than or equal to a constant.

32. The method according to claim 30 or 31, wherein (*cᵢ - cⱼ*) *> h*(τ), *cᵢ* is a linear term coefficient of the first sequence, *cⱼ* is a linear term coefficient of the second sequence, *h*(τ) is a linear function of τ, and τ is greater than or equal to a constant.

33. The method according to any one of claims 18 to 32, wherein generating the first secondary synchronization signal based on the first sequence comprises:
generating the first secondary synchronization signal based on at least two sequences, wherein the at least two sequences comprise the first sequence.

34. The method according to any one of claims 18 to 33, wherein determining the first sequence based on the first secondary synchronization signal comprises:
determining a fourth sequence based on the first secondary synchronization signal, wherein the fourth sequence is a first part of the first sequence;
the fourth sequence is obtained by extending the first sequence through cyclic shift extension or zero padding, and a length of the fourth sequence is greater than the length of the first sequence; or
the fourth sequence consists of a plurality of non-consecutive elements or a plurality of partially consecutive elements in the first sequence; or
the fourth sequence is obtained by changing values of a part of elements in the first sequence to 0.

35. A communication apparatus, comprising:
determining a first sequence, wherein the first sequence *x(n)* satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$, *e* is Euler's number, *f*(*n*) is a polynomial of degree x, x is greater than 2, *N* is a length of the first sequence, 0 ≤ n ≤ *N - 1,* M is an integer, and c is an integer;
generating a first secondary synchronization signal based on the first sequence; and
sending a first synchronization signal, wherein the first synchronization signal comprises the first secondary synchronization signal.

36. The apparatus according to claim 35, wherein N is P or P*^{y}*, P is a prime number, and y is a positive integer.

37. The apparatus according to claim 35 or 36, wherein the first synchronization signal further comprises a first primary synchronization signal, the first primary synchronization signal is generated based on a third sequence, and *f*(*n*) corresponding to the third sequence satisfies *f*(*n*) = *aₖn*³ + *bₖn*² *+ cₖn + dₖ*; and
*aᵢ* ≠ *aₖ*; or *aᵢ = aₙ = a,* and *bᵢ* ≠ *bₖ*; or *aᵢ = aₖ = a, bᵢ = bₖ* = b, and *cᵢ* ≠ *cₖ.*

38. The apparatus according to claim 37, wherein *bᵢ* and *bₖ* satisfy (3*a* × µ) mod *N =* (*bᵢ - bₖ)* or (3*a* × µ) mod *N =* (*bₖ* - *bᵢ*), and µ is greater than or equal to a constant.

39. The apparatus according to claim 38, wherein µ is a frequency offset between the first secondary synchronization signal and the first primary synchronization signal.

40. The apparatus according to claim 35 or 36, wherein the first sequence is an *i*^{th} sequence in a fourth sequence set, *fᵢ*(*n*) corresponding to the first sequence satisfies ${f}_{i} \left(n\right) = {am}_{i}^{3} + {bm}_{i}^{2} + {cm}_{i} + {d}_{i}$ *, mᵢ* = *n* - *kᵢ,* and 0 ≤ *k*₁ < *k*₂ .... < *k_{Q}* ≤ *N -* 1 , and Q represents a quantity of sequences comprised in the fourth sequence set.

41. The apparatus according to claim 40, wherein *kᵢ* corresponding to the first sequence and *kⱼ* corresponding to the second sequence satisfy ((*kᵢ - kⱼ*) mod *N)* > w, the second sequence is a *j*^{th} sequence in the fourth sequence set, and w is an integer.

42. The apparatus according to claim 40, wherein *kᵢ* corresponding to the first sequence and *kⱼ* corresponding to the second sequence satisfy: $\left({k}_{i}-{k}_{j}\right) mod N = \left⌊\frac{N}{\left⌈K/R\right⌉}\right⌋$ or $\left({k}_{i}-{k}_{j}\right) mod N = \left⌈\frac{N}{\left⌈K/R\right⌉}\right⌉$, wherein └ ┘ represents rounding down, ┌ ┐ represents rounding up, and R represents a maximum quantity of sequences supported by changing a linear term while a same cubic term coefficient and a same quadratic term coefficient are used in the fourth sequence set.

43. The apparatus according to claim 35 or 36, wherein the first sequence is an *i*^{th} sequence in a fifth sequence set, and that the first sequence *xᵢ*(*n*) satisfies ${x}_{i} \left(n\right) = {e}^{- j 2 π \left(\frac{{f}_{i} \left(n\right)}{N}+\frac{cn}{M}\right)}$ comprises:
the first sequence *xᵢ*(*n*) satisfies ${x}_{i} \left(n\right) = {e}^{- j 2 π \left(\frac{{a}_{i} {n}^{3} + {b}_{i} {n}^{2} + {c}_{i} n + {d}_{i}}{N}\right)} \times {e}^{- j 2 π \left(\frac{{g}_{i} n}{M}\right)}$, wherein M is an integer, and *gᵢ* is an integer.

44. The apparatus according to claim 35 or 36, wherein the first sequence belongs to a first sequence set, the first sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) = *aⱼn*³ *+ bⱼn*² *+ cⱼn + dⱼ,* wherein *aⱼ* ≠ *aᵢ.*

45. The apparatus according to claim 35 or 36, wherein the first sequence belongs to a second sequence set, the second sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) = *aⱼn*³ *+ bⱼn*² *+ cⱼn + dⱼ*, wherein *aᵢ = aⱼ = a,* and *bᵢ* ≠ *bⱼ.*

46. The apparatus according to claim 35, wherein *bᵢ* and *bⱼ* satisfy (3*a* × µ) mod *N =* (*bᵢ - bⱼ*) or (3*a* × µ) mod *N =* (*bⱼ* - *bᵢ*), and µ is greater than or equal to a constant.

47. The apparatus according to claim 35 or 36, wherein the first sequence belongs to a third sequence set, the third sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) = *aⱼn*³ + *bⱼn*² *+ cⱼn + dⱼ,* wherein *aᵢ = aⱼ = a, bᵢ = bⱼ* = b, and *cᵢ* ≠ *cⱼ.*

48. The apparatus according to claim 47, wherein a frequency offset between the second secondary synchronization signal and the first secondary synchronization signal is 0, *cᵢ* and *cⱼ* satisfy τ mod *N =* (*cᵢ - cⱼ*), and τ is greater than or equal to a constant.

49. The apparatus according to claim 47 or 48, wherein (*cᵢ - cⱼ*) *> h*(τ), *cᵢ* is a linear term coefficient of the first sequence, *cⱼ* is a linear term coefficient of the second sequence, *h*(τ) is a linear function of τ, and τ is greater than or equal to a constant.

50. The apparatus according to any one of claims 35 to 49, wherein generating the first secondary synchronization signal based on the first sequence comprises:
generating the first secondary synchronization signal based on at least two sequences, wherein the at least two sequences comprise the first sequence.

51. The apparatus according to any one of claims 35 to 50, wherein generating the first secondary synchronization signal based on the first sequence comprises:
generating the first secondary synchronization signal based on a fourth sequence, wherein the fourth sequence is a first part of the first sequence; or
the fourth sequence is obtained by extending the first sequence through cyclic shift extension or zero padding, and a length of the fourth sequence is greater than the length of the first sequence; or
the fourth sequence consists of a plurality of non-consecutive elements or a plurality of partially consecutive elements in the first sequence; or
the fourth sequence is obtained by changing values of a part of elements in the first sequence to 0.

52. A communication apparatus, comprising:
receiving a first synchronization signal, wherein the first synchronization signal comprises a first secondary synchronization signal; and
determining a first sequence *x(n)* based on the first secondary synchronization signal, wherein the first sequence satisfies $x \left(n\right) = {e}^{- j 2 π \left(\frac{f \left(n\right)}{N}\right)}$ or $x \left(n\right) = {e}^{- j 2 π \left(\frac{f \left(n\right)}{N}+\frac{cn}{M}\right)}$, *e* is Euler's number, *f*(*n*) is a polynomial of degree x, x is greater than 2, *N* is a length of the first sequence, 0 ≤ n ≤ *N - 1, M* is an integer, and c is an integer.

53. The apparatus according to claim 52, wherein N is P or P*^{y}*, P is a prime number, and y is a positive integer.

54. The apparatus according to claim 52 or 53, wherein the first synchronization signal further comprises a first primary synchronization signal, the first primary synchronization signal is generated based on a third sequence, and *f*(*n*) corresponding to the third sequence satisfies *f*(*n*) = *aₖn*³ + *bₖn*² *+ cₖn + dₖ*; and
*aᵢ* ≠ *aₖ*; or *aᵢ = aₖ = a,* and *bᵢ* ≠ *bₖ*; or *aᵢ = aₖ = a, bᵢ = bₖ* = b, and *cᵢ* ≠ *cₖ.*

55. The apparatus according to claim 54, wherein *bᵢ* and *bₖ* satisfy (3*a* × µ) mod *N =* (*bᵢ - bₖ*) or (3*a* × µ) mod *N =* (*bₖ* - *bᵢ*), and µ is greater than or equal to a constant.

56. The apparatus according to claim 55, wherein µ is a frequency offset between the first secondary synchronization signal and the first primary synchronization signal.

57. The apparatus according to claim 52 or 53, wherein the first sequence is an *i*^{th} sequence in a fourth sequence set, *fᵢ*(*n*) corresponding to the first sequence satisfies ${f}_{i} \left(n\right) = {am}_{i}^{3} + {bm}_{i}^{2} + {cm}_{i} + {d}_{i}$ *, mᵢ* = n - *kᵢ,* and 0 ≤ *k*₁ < *k*₂ .... < *k_{Q}* ≤ *N -* 1 , and Q represents a quantity of sequences comprised in the fourth sequence set.

58. The apparatus according to claim 57, wherein *kᵢ* corresponding to the first sequence and *kⱼ* corresponding to the second sequence satisfy ((*kᵢ - kⱼ*) mod *N)* > w, the second sequence is a *j*^{th} sequence in the fourth sequence set, and w is an integer.

59. The apparatus according to claim 57, wherein *kᵢ* corresponding to the first sequence and *kⱼ* corresponding to the second sequence satisfy: $\left({k}_{i}-{k}_{j}\right) mod N = \left⌊\frac{N}{\left⌈K/R\right⌉}\right⌋$ or $\left({k}_{i}-{k}_{j}\right) mod N = \left⌈\frac{N}{\left⌈K/R\right⌉}\right⌉$, wherein └ ┘ represents rounding down, ┌ ┐ represents rounding up, and R represents a maximum quantity of sequences supported by changing a linear term while a same cubic term coefficient and a same quadratic term coefficient are used in the fourth sequence set.

60. The apparatus according to claim 52 or 53, wherein the first sequence is an *i*^{th} sequence in a fifth sequence set, and that the first sequence *xᵢ*(*n*) satisfies ${x}_{i} \left(n\right) = {e}^{- j 2 π \left(\frac{{f}_{i} \left(n\right)}{N}+\frac{cn}{M}\right)}$ comprises:
the first sequence *xᵢ*(*n*) satisfies ${x}_{i} \left(n\right) = {e}^{- j 2 π \left(\frac{{a}_{i} {n}^{3} + {b}_{i} {n}^{2} + {c}_{i} n + {d}_{i}}{N}\right)} \times {e}^{- j 2 π \left(\frac{{g}_{i} n}{M}\right)}$, wherein M is an integer, and *gᵢ* is an integer.

61. The apparatus according to claim 52 or 53, wherein the first sequence belongs to a first sequence set, the first sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) = *aⱼn*³ + *bⱼn*² *+ cⱼn + dⱼ ,* wherein *aⱼ* ≠ *aᵢ.*

62. The apparatus according to claim 52 or 53, wherein the first sequence belongs to a second sequence set, the second sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) = *aⱼn*³ + *bⱼn*² + *cⱼn + dⱼ,* wherein *aᵢ = aⱼ = a,* and *bᵢ* ≠ *bⱼ.*

63. The apparatus according to claim 52, wherein *bᵢ* and *bⱼ* satisfy (3*a* × µ) mod *N =* (*bᵢ - bⱼ*) or (3*a* × µ) mod *N =* (*bⱼ* - *bᵢ*), and µ is greater than or equal to a constant.

64. The apparatus according to claim 52 or 53, wherein the first sequence belongs to a third sequence set, the third sequence set further comprises a second sequence, and the second sequence is used to generate a second secondary synchronization signal;
*fᵢ*(*n*) corresponding to the first sequence satisfies *fᵢ*(*n*) = *aᵢn*³ + *bᵢn*² + *cᵢn* + *dᵢ*; and
*fⱼ*(*n*) corresponding to the second sequence satisfies *fⱼ*(*n*) = *aⱼn*³ + *bⱼn*² *+ cⱼn + dⱼ ,* wherein *aᵢ = aⱼ = a, bᵢ = bⱼ* = b, and *cᵢ* ≠ *cⱼ.*

65. The apparatus according to claim 64, wherein a frequency offset between the second secondary synchronization signal and the first secondary synchronization signal is 0, *cᵢ* and *cⱼ* satisfy τ mod *N =* (*cᵢ - cⱼ*)*,* and τ is greater than or equal to a constant.

66. The apparatus according to claim 64 or 65, wherein (*cᵢ - cⱼ) > h*(τ), *cᵢ* is a linear term coefficient of the first sequence, *cⱼ* is a linear term coefficient of the second sequence, *h*(τ) is a linear function of τ, and τ is greater than or equal to a constant.

67. The apparatus according to any one of claims 52 to 66, wherein generating the first secondary synchronization signal based on the first sequence comprises:
generating the first secondary synchronization signal based on at least two sequences, wherein the at least two sequences comprise the first sequence.

68. The apparatus according to any one of claims 52 to 67, wherein determining the first sequence based on the first secondary synchronization signal comprises:
determining a fourth sequence based on the first secondary synchronization signal, wherein the fourth sequence is a first part of the first sequence;
the fourth sequence is obtained by extending the first sequence through cyclic shift extension or zero padding, and a length of the fourth sequence is greater than the length of the first sequence; or
the fourth sequence consists of a plurality of non-consecutive elements or a plurality of partially consecutive elements in the first sequence; or
the fourth sequence is obtained by changing values of a part of elements in the first sequence to 0.

69. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 17; or the processor is configured to execute the computer program stored in the memory, to enable the communication apparatus to perform the method according to any one of claims 18 to 34.

70. A chip system, wherein the chip system comprises a processor and an interface, the processor is configured to invoke instructions from the interface and execute the instructions, and when the processor executes the instructions, the method according to any one of claims 1 to 17 is implemented; or when the processor executes the instructions, the method according to any one of claims 18 to 34 is implemented.

71. A computer-readable storage medium, wherein the computer-readable storage medium is configured to store a computer program, and when the computer program is run on a computer, the computer is enabled to perform the method according to any one of claims 1 to 17; or when the computer program is run on a computer, the computer is enabled to perform the method according to any one of claims 18 to 34.

72. A computer program product, wherein the computer program product comprises a computer program, and when the computer program is run on a computer, the computer is enabled to perform the method according to any one of claims 1 to 17; or when the computer program is run on a computer, the computer is enabled to perform the method according to any one of claims 18 to 34.
